# EUROPÄISCHE PATENTSCHRIFT

(11) **EP 3 586 395 B1**
(45) Veröffentlichungstag und Bekanntmachung des Hinweises auf die Patenterteilung: **16.12.2020**
(21) Anmeldenummer: 18715959.5
(22) Anmeldetag: 26.02.2018
(51) Int. Cl.: H01M 10/6563, H01M 10/6557, H01M 10/667

(54) **BATTERIEPACK MIT KONVEKTIVER KÜHLUNG**
BATTERY PACK HAVING CONVECTIVE COOLING
BATTERIE À REFROIDISSEMENT PAR CONVECTION

(30) Priorität: 24.02.2017 WO PCT/IB2017/051083
(43) Veröffentlichungstag der Anmeldung: 01.01.2020
(73) Patentinhaber: TQ-Systems GmbH, 82229 Seefeld (DE)
(72) Erfinder: ROSSBERGER, Antonius Georg, 82229 Seefeld (DE); HORNUNG, Heinz, 82229 Seefeld (DE)
(74) Vertreter: Schweiger, Martin
(86) Internationale Anmeldenummer: PCT/IB2018/051180
(87) Internationale Veröffentlichungsnummer: WO 2018/154528

(56) Entgegenhaltungen:
- DE-A1-102014 103 095
- US-A1- 2010 116 570

## Beschreibung

Der Gegenstand der vorliegenden Beschreibung bezieht sich auf konvektive gekühlte Batteriepacks oder Batteriestapel, die insbesondere für elektrisch angetriebene Fahrzeuge und speziell für elektrisch angetriebene Fahrräder geeignet sind.

Die Beschreibung offenbart eine stabförmige wiederaufladbare Elektrobatterie für ein Fahrzeug bzw. Fahrzeugbatterie. Die Elektrobatterie weist ein Gehäuse auf, in dem ein Batteriestapel oder Batteriepack angeordnet ist. Das Gehäuse kann insbesondere einen ersten Gehäusedeckel an einem ersten Ende des Gehäuses, einen zweiten Gehäusedeckel an einem gegenüberliegenden zweiten Ende des Gehäuses und ein dazwischen befindliches Gehäusemittelteil aufweisen. Die Gehäusedeckel können jeweils separat oder aber in einem Stück mit dem Gehäuse ausgeführt sein. Vorteilhafterweise sind die Gehäusedeckel jeweils zu Aufnahme einer Endhülsenplatte ausgebildet, die ihrerseits zur Aufnahme von Batteriezellen geeignet ist. Weiterhin kann der erste Gehäusedeckel einen Stromanschluss aufweisen, der elektrisch mit dem Batteriestapel verbunden ist, und die Gehäusedeckel können ein oder mehr Befestigungsbereiche aufweisen, die zum Befestigen an einem Fahrradrahmen geeignet sein können.

Der Batteriestapel weist zwei Teilstapel auf, die in Reihe geschaltet sind, wobei jeder Teilstapel aus mindestens zwei in Reihe geschalteten Gruppen von Sekundärbatterien besteht.

Die Gruppen sind in einer Längsrichtung der Elektrobatterie gestapelt, wobei die Batterien in jeder Gruppe von Batterien über mindestens ein Leadframe parallelgeschaltet sind. Die Gruppen sind in Längsrichtung gestapelt, oder anders ausgedrückt steht jede Batterie der Gruppe über ein Leadframe in Längsrichtung mit einer Batterie einer in Längsrichtung benachbarten Gruppe in Kontakt.

Die Leadframes sind zwischen in Längsrichtung benachbarten Gruppen von Batterien angeordnet. Außerdem sind an den Enden des Batteriestapels weitere Leadframes angeordnet, die die Batterien einer Gruppe aus Batterien jeweils elektrisch verbinden. Dabei können die Leadframes an einem Ende des Batteriestapels miteinander verbunden bzw. kurzgeschlossen sein, so dass die Teilstapel in Reihe geschaltet sind. An einem dazu entgegengesetzten Ende ist zweckmäßigerweise ein Anschlussstecker mit Plus- und Minuspol vorgesehen.

Insbesondere können die Batterien durch gleichlange Stabbatterien gebildet sein, und das Leadframe kontaktiert an einer Seite die Pole der Batterie, verbindet also alle Pluspole oder alle Minuspole einer Gruppe von Batterien. Die Batterien können aus mehreren in Längsrichtung gestapelten Batteriezellen gebildet sein. Vorzugsweise besteht eine Batterie jedoch aus nur einer Batteriezelle.

Die Batterien bilden oder umschließen einen Luftkanal, der sich in der Längsrichtung der Elektrobatterie von einem Ende des Gehäuses bis zu einem gegenüberliegenden zweiten Ende des Gehäuses erstreckt. Innerhalb dieses des Luftkanals ist ein Batteriemanagement-System- bzw. ein BMS-Gehäuse angeordnet, das sich in der Längsrichtung des Gehäuses dem ersten Ende des Gehäuses zu dem gegenüberliegenden zweiten Ende des Gehäuses erstreckt. Das BMS Gehäuse weist BMS-Kontakte auf, die jeweils mit den Leadframes separat elektrisch verbunden sind. Die Längserstreckung des BMS-Gehäuses ist zumindest so dimensioniert, dass alle Leadframes über die BMS-Kontakte kontaktiert werden können.

Der Luftkanal ist zur Ausbildung einer Luftströmung in der Längsrichtung vorgesehen, welche die an den Luftkanal angrenzenden Batterien umspült bzw. daran entlangströmt. Die Batterien bilden insgesamt eine zylindrische Anordnung, wobei jede Batterie zumindest mit dem Luftkanal oder mit einem Außenraum des Batteriestapels in Verbindung steht.

Hier und im Folgenden bezeichnet der Batteriestapel die gesamte in Längsrichtung gestapelte Anordnung aus Batterien, wogegen ein Teilstapel die hintereinander gestapelten parallel geschalteten Batteriegruppen bezeichnet und ein Einzelstapel sich auf die hintereinander gestapelten Batterien bezieht.

Insbesondere kann das Gehäuse der Fahrzeugbatterie bzw. einer der Gehäusedeckel einen Stecker bzw. Außenkontakte aufweisen, durch den der Batteriestapel und das BMS Gehäuse des Batterie-Managementsystems elektrisch kontaktiert werden können. Das Batterie-Managementsystem kann komplett auf dem BMS-Gehäuse untergebracht sein. Es können aber auch weitere Komponenten des BMS außerhalb des BMS Gehäuses angeordnet sein. Das Gehäuse weist einen Gehäusemantel auf, der zur verbesserten thermischen Leitfähigkeit aus Metall gefertigt sein kann.

Zur verbesserten Belüftung kann ein Lüfter zur Kühlung vorgesehen sein, der elektrisch mit den Batterien verbunden ist, und der über eine Steuerleitung mit dem Batteriemanagement-system verbunden ist, wobei der Lüfter so angeordnet ist, dass er einen Luftstrom durch den Hohlraum erzeugt, wenn er angeschaltet ist. Insbesondere kann er in dem Luftkanal oder an einem Ende des Luftkanals angeordnet sein. Er kann aber auch an einer anderen Stelle in dem Gehäuse angeordnet sein, die mit dem Luftkanal kommuniziert, also durch ein oder mehrere Luftkanäle in Verbindung steht.

Eine effektive Kühlung wird unter anderem dadurch erreicht, dass Luft in einer ersten Richtung durch einen Hohlraum bzw. Luftkanal strömt, der zwischen Einzelstapeln aus Batteriezellen ausgeformt ist, und dabei an den Innenseiten der Batteriezellen entlangstreicht und in einer dazu entgegengesetzten Richtung an einer Außenseite des Batteriestapels entlangstreicht, wobei die Luft gleichzeitig an einer Gehäusewand entlangstreicht, wodurch die Wärme über das Gehäuse der Fahrzeugbatterie nach außen abgeführt wird.

Diese Kühlwirkung kann durch geeignete Ausbildung des Gehäuses noch verbessert werden, wie beispielsweise Anpassung der Form des Gehäuses an den Querschnitt des Batteriestapels, so dass einerseits genügend Raum zur Ausbildung der Luftströmung vorhanden ist, aber andererseits die zu kühlenden Batterien nicht zu weit vom Gehäuse entfernt sind. Weiterhin kann das Gehäuse aus einem wärmeleitenden Material wie Metall gefertigt sein. Das Gehäuse der Fahrzeugbatterie kann so geformt sein, dass die äußere Oberfläche vergrößert wird, beispielsweise durch Kühlrippen, es kann aber auch eine glatte Oberfläche aufweisen.

Vorteilhafterweise ist das BMS-Gehäuse des BMS so mit den Leadframes verbindbar, dass eine Montage zu einer elektrischen Verbindung zwischen dem Batteriemanagementsystem und den Leadframes führt, was beispielsweise durch Einschieben oder Einstecken eines Bereichs des Leadframes in einen dazu passenden Kontakt bewirkt werden kann. Speziell kann dies durch Einschieben einer Kontaktfahne des Leadframes unter ein Federelement des BMS-Kontaktes erreicht werden, wobei das Einschieben in einer Längsrichtung des BMS-Gehäuses erfolgt.

Insbesondere kann die Verbindung zwischen den Leadframes und den BMS-Kontakten durch Zusammenstecken erfolgen, so dass keine Löt- oder Schweißverbindung erforderlich ist und die Batterie somit einfach montiert und demontiert werden kann. Die entsprechenden Kontakte der Leadframes können durch Reibschluss und/oder Formschluss gehalten sein, insbesondere unter Verwendung von Federelementen. Diese Federelemente können an den Leadframes und/oder an den BMS-Kontakten vorgesehen sein.

Zur verbesserten mechanischen Stabilität kann ein vorzugsweise aus einem Stück und vorzugsweise aus Plastik hergestellte Verbindungshülsenplatte zwischen in axialer Richtung benachbarten Batterien vorgesehen sein. Die Verbindungshülsenplatte verbindet je zwei in axialer Richtung benachbarte Batterien mechanisch miteinander und verbindet die in axialer Richtung auf derselben Höhe befindliche Batterien untereinander mechanisch.

Außerdem verbindet die Verbindungshülsenplatte die Batterien einer Gruppe von Batterien miteinander und verbindet die Gruppen von Batterien, die sich in axialer Richtung auf derselben Höhe befinden, und die zusammen ein Batteriebündel bilden, miteinander.

Insbesondere kann je Batteriegruppe ein Leadframe in die Verbindungshülsenplatte eingesetzt sein. Die Leadframes können dabei abhängig von der Polung der Batteriegruppe auf unterschiedlichen Seiten eingesetzt sein. Die Verbindungshülsenplatte weist eine zentrale Öffnung auf, die zu dem Luftkanal ausgerichtet ist, und die insbesondere rechteckig ausgebildet sein kann. Weiterhin weist sie zylindrische Aufnahmebereiche auf, in die Endbereiche der Batterien eingesetzt sind.

Insbesondere kann die Fahrzeugbatterie zwei Teilstapel mit jeweils zwei in Reihe geschalteten, hintereinander angeordneten Gruppen von Batterien und 6 Leadframes aufweisen, zwei Teilstapel mit jeweils drei Gruppen und 8 Leadframes und so weiter. Allgemein ist die Anzahl der Leadframes vorzugsweise gleich der Anzahl der Teilstapel plus der Summe der Anzahl der Gruppen von Batterien in den jeweiligen Teilstapeln, was sich daraus ergibt, dass sich zwischen zwei Gruppen eines Teilstapels jeweils ein Leadframe befindet, durch den die Batterien der Gruppe parallelgeschaltet sind und ebenso am Anfang und am Ende eines jeden Teilstapels. Weiterhin ist eine gerade Anzahl von Teilstapeln vorteilhaft, da dann der Strom leicht U-förmig zu einem Anschluss zurückgeleitet werden kann.

Des Weiteren kann an einem Ende der Batterieanordnung oder an beiden Enden der Batterieanordnung eine jeweilige Endhülsenplatte zur Aufnahme der an einem Ende der Elektrobatterie befindlichen Batterien vorgesehen sein. Die Endhülsenplatte verbindet die an dem Ende befindlichen Batterien mechanisch miteinander und ist ebenfalls vorzugsweise einstückig und vorzugsweise aus Plastik gefertigt. In den Endhülsenplatte können je Batteriegruppe ein Leadframe eingesetzt sein, wobei die Leadframes miteinander elektrische verbunden sein können.

Die Endhülsenplatte weist zylindrische Aufnahmebereiche auf, in die Endbereiche der an dem Ende der Batterieanordnung befindlichen Batterien eingesetzt sind. Die Endhülsenplatte weist eine zentrale Öffnung auf, die zu dem Luftkanal ausgerichtet ist, und die insbesondere rechteckig ausgebildet sein kann.

Die Endhülsenplatte und die Verbindungshülsenplatte schaffen jeweils zusätzliche Stabilität der Zellenenden zueinander und sorgen durch Ausrichtung für eine verbesserte Kontaktierung der Zellenenden zum Leadframe.

Insbesondere kann die Anordnung von Batterien so ausgestaltet sein, dass der Luftkanal von einer inneren Lage aus insgesamt sechs Einzelstapeln von in Längsrichtung hintereinander gestapelten Batterien des Batteriestapels. umgeben ist. Insbesondere können die Batterien der inneren Lage in den Ecken eines Sechsecks, insbesondere eines regelmäßigen Sechsecks, angeordnet sein oder sie können in den Ecken und auf den Seitenmitten eines Dreiecks, insbesondere eine gleichseitigen Dreiecks angeordnet sein.

An die innere Lage aus Batterien schließt sich in radialer Richtung eine äußere Lage aus weiteren Einzelstapeln von Batterien an. Dabei können die weiteren Batterien des Batteriestapels insbesondere sämtlich in Einzelstapeln angeordnet sein, die sich in radialer Richtung an die innere Lage anschließen. Beispielsweise können die Batterien der äußern Lage in vier Einzelstapeln angeordnet sein, die die Ecken eines Rechtecks oder eines Quadrats bilden.

Insbesondere können die Batterien der äußeren Lage so angeordnet sein, dass sämtliche Nachbarn einer Batterie der äußeren Lage nicht weiter als die Batterie der äußeren Lage vom Mittelpunkt des Luftkanals entfernt sind.

Gemäß einem weiteren Ausführungsbeispiels ist der Luftkanal von einer inneren Lage aus insgesamt acht Einzelstapeln von in Längsrichtung hintereinander gestapelten Batterien umgeben. Die innere Lage von Batterien kann insbesondere in den Ecken und in den Kantenmitten eines Rechtecks oder Quadrats angeordnet sein. An die innere Lage schließt sich in radialer Richtung eine äußere Lage aus weiteren Einzelstapeln von Batterien an. Wobei insbesondere sämtliche weiteren Batterien des Batteriestapels in Einzelstapeln angeordnet sind, die sich in radialer Richtung an die innere Lage anschließen. Beispielsweise kann die äußere Lage aus vier Einzelstapeln bestehen oder aus zweimal vier Einzelstapeln, wobei die vier Einzelstapel jeweils in den Ecken eines Quadrats oder Rechtecks angeordnet sind.

Die weiter oben beschriebene längs gestapelte Anordnung der Batteriezellen bietet mehrere Vorteile. So kann das BMS ins Batterieinnere verlegt und lang und schmal ausgeführt werden. Außerdem kann erreicht werden, dass keine Zellen mehr von anderen Zellen umschlossen sind, was Vorteile hinsichtlich Temperaturverhalten bringen kann. Das ist besonders bei leistungsdichten Zellen von Vorteil. Außerdem kann die Batterie dadurch so aufgebaut werden, dass durch einfache Verschaltung weniger Montagezeit erforderlich ist.

Gemäß dieser Anordnung bilden die Batterien eine zylindrische Anordnung von Batterien bzw. Batteriezellen, die einen zylindrischen Hohlraum umschließen. Dabei steht jede der Batterien entweder mit dem Hohlraum oder mit dem Außenraum in Bezug auf die zylindrische Anordnung in Verbindung.

Der Gegenstand der vorliegenden Beschreibung wird nun unter Bezugnahme auf die folgenden Figuren weiter erläutert.
- Figur 1: zeigt einen Batteriestapel gemäß einer ersten Ausführungsform,
- Figur 2: zeigt eine Endhülsenplatte des Batteriestapels von Fig. 1 mit darin eingesetzten Leadframes,
- Figur 3: zeigt die Endhülsenplatte mit den Leadframes und eine BMS-Komponente mit BMS-Kontakten,
- Figur 4: zeigt die die Endhülsenplatte von Fig. 4 mit darin eingesetzter BMS-Komponente,
- Figur 5: zeigt die Endhülsenplatte von Fig. 4 mit einem aus einer ersten Gruppe und einer zweiten Gruppe von parallel geschalteten Batteriezellen bestehenden Batteriebündel,
- Figur 6: zeigt die Anordnung von Fig. 5 und einen Leadframe, der zwischen zwei Gruppen aus parallel geschalteten Batteriezellen angeordnet ist,
- Figur 7: zeigt die Anordnung von Fig. 6 und einen Verbindungshülsenplatte, die hintereinander angeordnete Batteriebündel mechanisch verbindet,
- Figur 8: zeigt die Anordnung von Fig. 6 mit zwei Leadframes, aufgesetzter Verbindungshülsenplatte einem weiteren Batteriebündel,
- Figur 9: zeigt die Anordnung von Fig. 9 mit einem weiteren Leadframe und einem weiteren Paar von BMS-Kontakten,
- Figur 10: zeigt eine Explosionsansicht des Batteriestapels von Fig. 1, der aus sieben miteinander verbundenen Batteriebündeln besteht, die an den gegenüberliegenden Enden jeweils durch eine Endhülsenplatte mit darin eingesetzten Leadframes abgeschlossen sind,
- Figur 11: zeigt den Batteriestapel von Fig. 1 und einen Teil eines Batteriegehäuses,
- Figur 12: zeigt eine Fahrzeugbatterie, die das Batteriegehäuse von Fig. 11, den darin eingesetzten Batteriestapel, einen ersten Gehäusedeckel und einen zweiten Gehäusedeckel aufweist,
- Figur 13: zeigt die Fahrzeugbatterie von Fig. 11 im zusammengebauten Zustand,
- Figur 14: zeigt einen hinteren Teil des Batteriestapels von Fig. 1, der vier Batteriebündel aufweist,
- Figur 15: zeigt den Batteriestapel von Fig. 1 mit darauf aufgesetztem ersten Gehäusedeckel und zweiten Gehäusedeckel,
- Figur 16a: zeigt eine Teilansicht der Fahrzeugbatterie mit BMS-Komponente und Leadframes,
- Figur 16b: zeigt einen Querschnitt durch eine Fahne des Leadframes, die in einen BMS-Kontakt eingreift entlang der Querschnittslinie E-E der Fig. 16a,
- Figur 17: zeigt eine Verbindungshülsenplatte,
- Figur 18: zeigt eine Endhülsenplatte,
- Figur 19: zeigt einen Leadframe,
- Figur 20: zeigt einen vorderen Gehäusedeckel mit Anschlussöffnung,
- Figur 21: zeigt eine Seitenansicht der Fahrzeugbatterie von Fig. 12 und 13,
- Figur 22: zeigt einen Längsschnitt durch die Fahrzeugbatterie von Fig. 21 entlang einer Schnittebene A-A,
- Figur 23: zeigt einen Längsschnitt durch die Fahrzeugbatterie von Fig. 21 entlang einer Schnittebene B-B, die senkrecht zur Schnittebene A-A steht,
- Figur 24: zeigt einen Querschnitt durch die Fahrzeugbatterie von Fig. 21 entlang einer Schnittebene C-C,
- Figur 25: zeigt eine schematische Darstellung einer BMS-Elektronik,
- Figur 26: zeigt eine schematische Darstellung der Batterieanordnung der Fahrzeugbatterie von Fig. 1,
- Figur 27: zeigt eine weitere Batterieanordnung, bei der eine innerste Lage von Batterien in einem Quadrat angeordnet sind,
- Figur 28: zeigt eine weitere Batterieanordnung, bei der eine innerste Lage von Batterien in einem Quadrat angeordnet sind,
- Figur 29: zeigt eine weitere Batterieanordnung, bei der eine innerste Lage von Batterien in einem Dreieck angeordnet sind,
- Figur 30: zeigt eine Ladezustandsanzeige mit einem optischen Sensor, die an dem Gehäuse der Batteriezelle von Fig. 1 angebracht ist,
- Figur 31: zeigt eine schematische Ansicht eines Spannungsverlaufs an einer Photodiode der Ladezustandsanzeige von Fig. 30,
- Figur 32: zeigt ein Flussdiagramm einer Triggerung der Ladezustandsanzeige von Fig. 30,
- Figur 33: zeigt eine Ladezustandsanzeige mit einem kapazitiven Sensor, die an dem Gehäuse der Batteriezelle von Fig. 1 angebracht ist,
- Figur 34: zeigt eine Ladezustandsanzeige mit einem Erschütterungssensor, die an dem Gehäuse der Batteriezelle von Fig. 1 angebracht ist, und
- Figur 35: zeigt eine Ladezustandsanzeige mit einem Neigungssensor, die an dem Gehäuse der Batteriezelle von Fig. 1 angebracht ist.

In der folgenden Beschreibung werden Details dargestellt, um die Ausführungsbeispiele zu beschreiben. Wie dem Fachmann ersichtlich ist, können die Ausführungsbeispiele gegebenenfalls auch ohne solche Details verwirklicht werden.

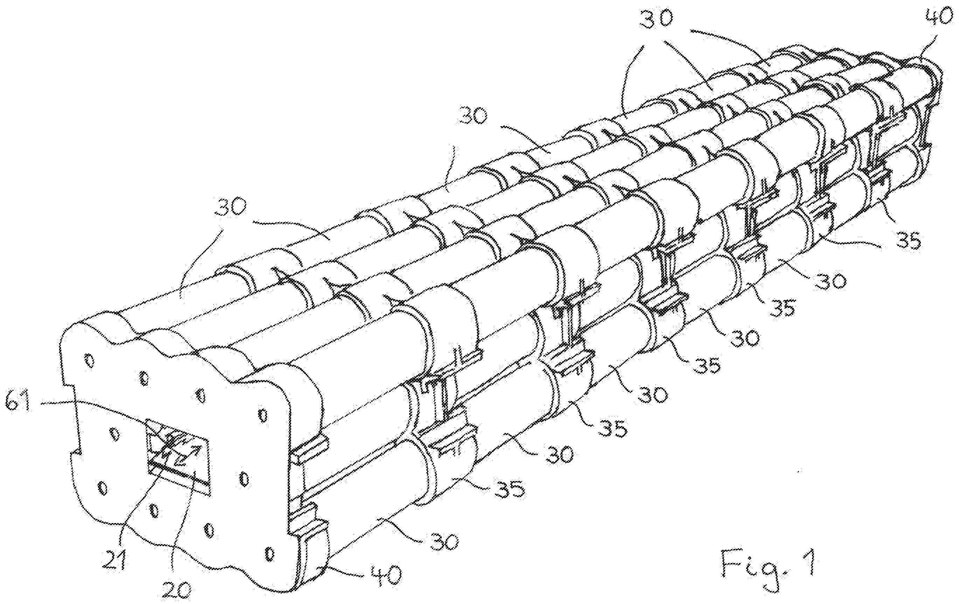

Die Figuren 1 bis 25 zeigen verschiedene Ansichten oder Teilansichten einer Fahrzeugbatterie gemäß einem ersten Ausführungsbeispiel.

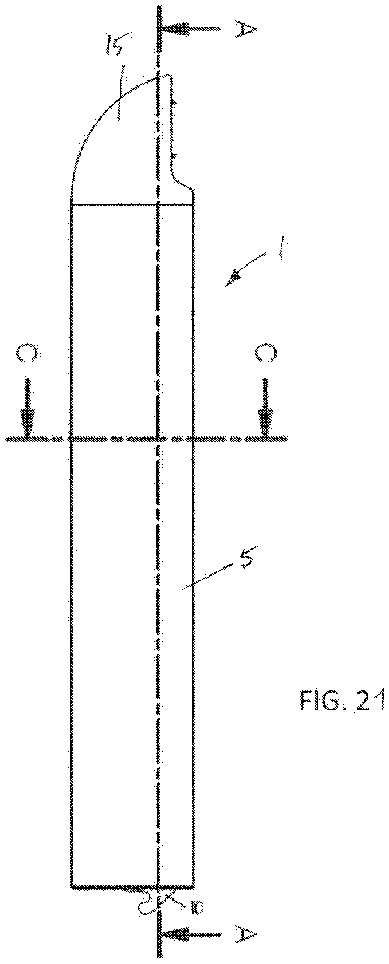

Die zusammengebaute Fahrzeugbatterie ist besonders gut in den Ansichten von Fig. 21 bis 24 zu erkennen. Ein schrittweiser Zusammenbau der Fahrzeugbatterie ist besonders gut in den Ansichten der Fig. 1 bis 20 zu erkennen.

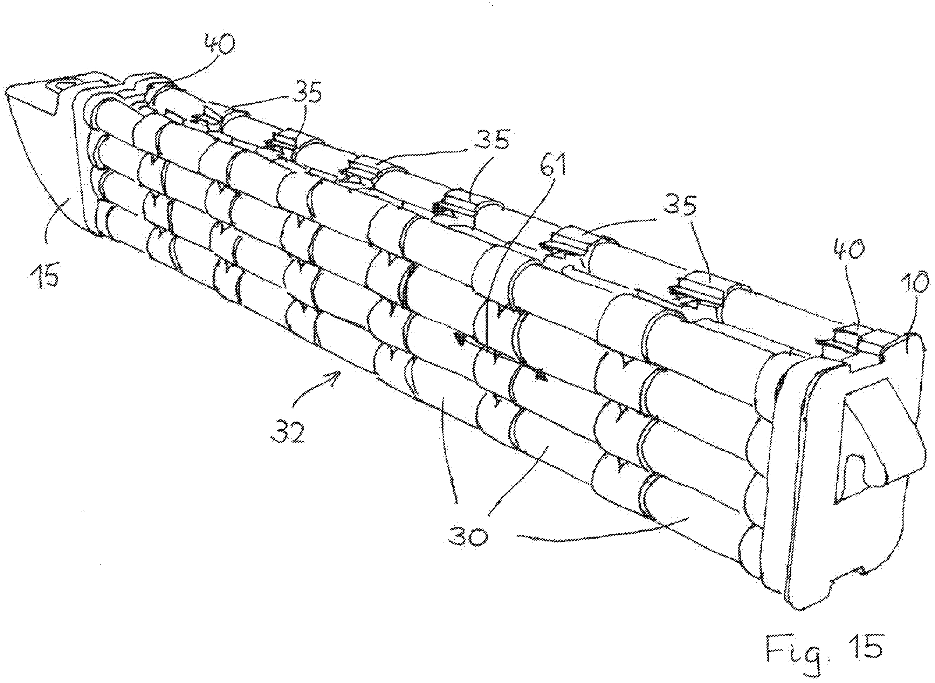

Fig. 21 zeigt eine Seitenansicht der Fahrzeugbatterie 1, in der ein Batteriegehäuse 5, ein erster Gehäusedeckel 15, der auf einer ersten Seite auf das Batteriegehäuse 5 aufgesetzt ist und ein zweiter Gehäusedeckel 10, der auf einer gegenüberliegenden zweiten Seite auf das Batteriegehäuse 5 aufgesetzt ist, gezeigt ist. In der Ansicht von Fig. 21 ist lediglich ein Befestigungshaken des ersten Gehäusedeckels 10 zu gezeigt. Der erste Gehäusedeckel 10 ist am besten in Fig. 15 zu erkennen.

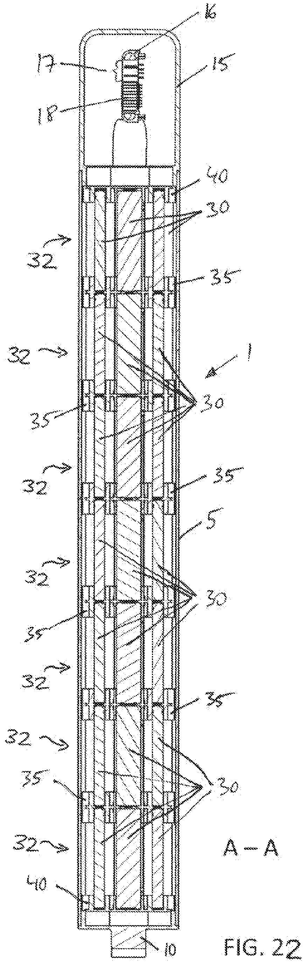

Fig. 22 zeigt einen Längsschnitt durch die Fahrzeugbatterie 1 entlang der in Fig. 21 gezeigten Querschnittsebene B-B. Das Gehäuse weist einen Batteriestapel 31 auf, der am besten in Fig. 1 zu erkennen ist. Der Batteriestapel 31 weist unter anderem Batteriezellen 30 auf, die über Verbindungshülsenplatten 35 mechanisch miteinander verbunden sind, wobei die Batterien an den beiden gegenüberliegenden Enden des Batteriestapels 31 über Endhülsenplatten 40 mechanisch miteinander verbunden sind.

Die in Fig. 22 gezeigten Batteriezellen 30 gehören jeweils zu Gruppen von Batteriezellen 30, die parallel zueinander geschaltet sind, wobei die Gruppen ihrerseits in Serie zueinander geschaltet sind. Die Batteriezellen sind durch Sekundärbatterien bzw. Akkumulatoren gebildet, die wiederaufladbar sind.

Der erste Gehäusedeckel 10 ist an einer ersten Seite in das Batteriegehäuse 5 eingesetzt und liegt über einen Steg an einer ersten Endhülsenplatte 40 an. In ähnlicher Weise ist der zweite Gehäusedeckel 15 an einer dazu gegenüberliegenden zweiten Seite in das Batteriegehäuse 10 eingesetzt und liegt über einen Steg an einer zweiten Endhülsenplatte 40 an.

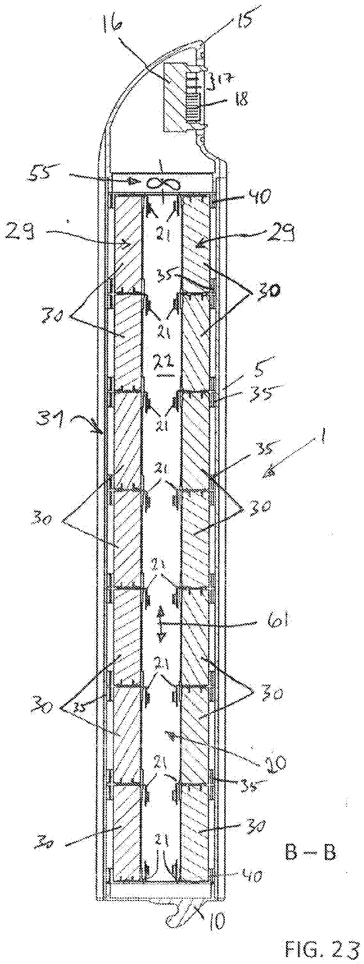

Der zweite Gehäusedeckel 15 weist einen Anschlussstecker 16 auf, der zwei Stromversorgungsanschlüsse 17 und Mess- und Steuerungsanschlüsse 18 aufweist, die auch als Eingabe- und Ausgabeanschlüsse bezeichnet werden. die Mess- und Steuerungsanschlüsse sind über Eingabe- und Ausgabeleitungen mit einer BMS-Elektronik 23 eines Batteriemanagement-System (BMS) 20 verbunden, das in Fig. 23 gezeigt ist. Die Stromversorgungsanschlüsse 17 sind über die ersten beiden Leadframes 45 mit den Batteriezellen 30 verbunden. In einer alternativen Ausführungsform können die Stromversorgungsanschlüsse auch indirekt über das Batteriemanagementsystem mit den Batteriezellen verbunden sein.

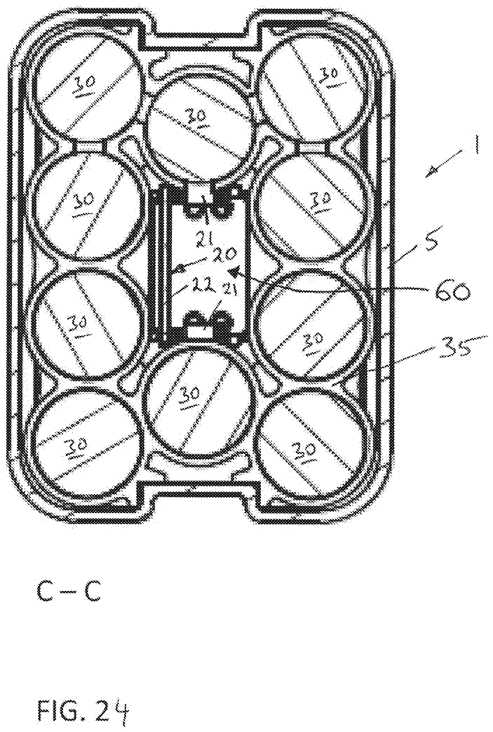

Die Fig. 23 zeigt einen weiteren Längsschnitt der Fahrzeugbatterie 1, dessen Schnittebene B-B auf der Schnittebene der Fig. 22 senkrecht steht und mittig durch das Gehäuse 5 verläuft. Die in Fig. 23 rechts gezeigten Batteriezellen 30 eines ersten Einzelstapels 29 sind in einer ersten Richtung gepolt, und die in Fig. 23 rechts gezeigten Batteriezellen 30 eines zweiten Einzelstapels 29 sind in einer dazu entgegengesetzten zweiten Richtung gepolt. In Fig. 23 sind zwei in Längsrichtung geschnittene Einzelstapel 29 gezeigt, wogegen Fig. 24 zehn in Querrichtung geschnittene Einzelstapel 29 zeigt.

Die Einzelstapel sind an der Seite, die dem Stecker gegenüberliegt, in Serie geschaltet, so dass der Strom U-förmig wieder zurückgeleitet wird. Dies wird dadurch erreicht, dass die Leadframes an der Endplatte bzw. Endhülsenplatte miteinander leitend verbunden sind.

Ein Ventilator 55 ist im Bereich des zweiten Deckels 15 in der Nähe der rechteckigen Öffnung der Endhülsenplatte 40 vorgesehen. Zur besseren Luftzufuhr können in Fig. 23 und 21 bis 24 nicht gezeigte Öffnungen in den Gehäusedeckeln 10, 15 vorgesehen werden, wobei zusätzliche Filter, Ventile, gewinkelte Luftkanäle oder ähnliche Vorrichtungen dazu dienen können, Staub und Wasser aus dem Gehäuseinnern fernzuhalten.

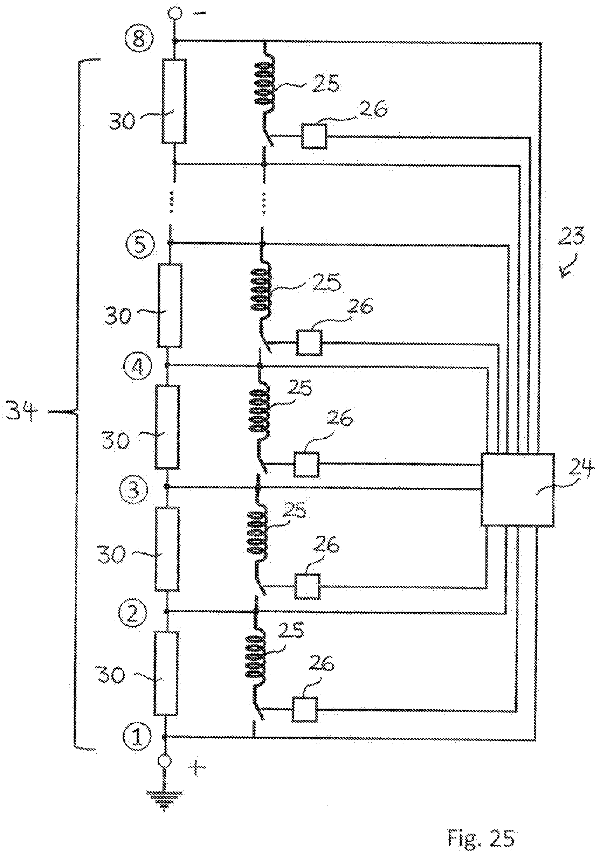

Das BMS 20 weist BMS-Kontakte 21 aus, wobei für je ein Bündel 32 von Batteriezellen 30 jeweils zwei BMS-Kontakte 21 vorhanden sind und wobei je ein BMS-Kontakt 21 mit einer Gruppe von parallel geschalteten Batteriezellen 30 verbunden ist. Dadurch kann die Spannung an jeder Gruppe von Batterien einzeln abgegriffen werden, wodurch eine Bestimmung des Ladezustands der Fahrzeugbatterie verbessert werden kann. Dies ist in dem Schaltplan von Fig. 25 beispielhaft illustriert.

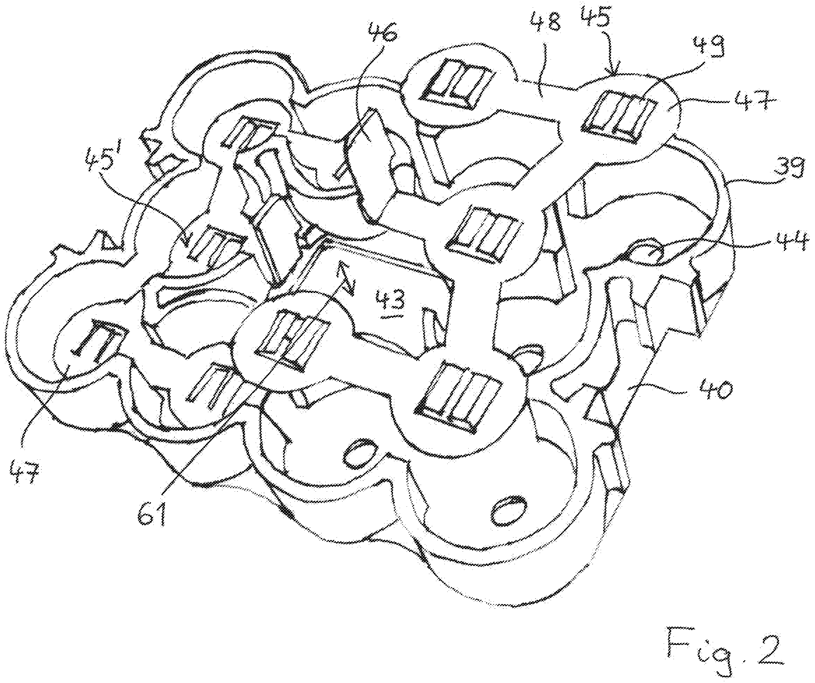

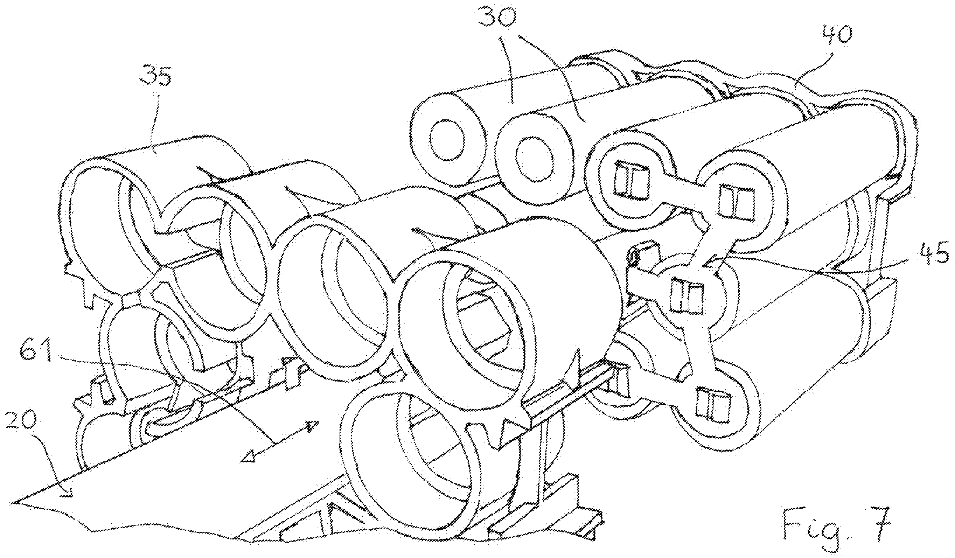

Die Parallelschaltung der Batteriezellen 30 wird über Leadkontakte bewirkt, die beispielsweise in Fig. 2 und 7 besser erkennbar sind. Das Ausführungsbeispiel von Fig. 22 und 23 weist insgesamt sieben Batteriebündel 32 auf, die jeweils durch zwei Leadframes 45 voneinander getrennt sind.

Das BMS 20 weist eine BMS-Elektronik auf, die in Fig. 23 nicht gezeigt ist. Die BMS-Elektronik ist in beispielhafter Form in Fig. 25 schematisch gezeigt. Die BMS-Elektronik ist durch ein BMS-Gehäuse gekapselt, das in den Figuren nicht gezeigt ist.

Fig. 24 zeigt ein Schnitt durch die Fahrzeugbatterie 1 in der in Figur 21 gezeigten Schnittebene C-C. In Fig. 24 sind die insgesamt zehn Batteriezellen 30 eines Batteriebündels im Querschnitt gezeigt. Von diesen zehn Batteriezellen 30 sind die oben gezeigten fünf Batteriezellen 30 in einer ersten Richtung gepolt und durch einen in fig. 24 nicht gezeigten ersten Leadframe parallelgeschaltet. In ähnlicher Weise sind die unten gezeigten fünf Batteriezellen 30 in einer zu der ersten Richtung entgegengesetzten zweiten Richtung gepolt und durch einen in Fig. 24 nicht gezeigten zweiten Leadframe parallelgeschaltet.

Die oberen fünf Batteriezellen 30 sind durch den oben gezeigten BMS-Kontakt 21 mit dem BMS 20 verbunden und die unteren fünf Batteriezellen 30 sind durch den unten gezeigten BMS-Kontakt 21 mit dem Batteriemanagementsystem 20 verbunden. Die zehn Batteriezellen 30 sind untereinander durch eine Verbindungshülsenplatte 35 mechanisch verbunden, die in Fig. 24 im Querschnitt gezeigt ist.

Die Batteriezellen 30 sind entsprechend einer hexagonalen Kugelpackung angeordnet, wobei die Verbindungshülsenplatte so gestaltet ist, dass zwischen benachbarten Batteriezellen 30 jeweils ein Zwischenraum vorhanden ist. Eine innere Lage von Batterien 30 ist in Form eines regelmäßigen Sechsecks angeordnet. An zwei gegenüberliegenden Kanten des Sechsecks sind an gegenüberliegenden Ecken der Kanten jeweils in Verlängerung der Kante zwei weitere Batteriezellen 30 angeordnet. Diese vier Batterien 30 bilden eine äußere Lage von Batterien.

Die in Fig. 24 gezeigte Anordnung von Batteriezellen 30 bildet einen rechteckigen Umriss mit zwei gegenüberliegenden Vertiefungen, denen zwei gegenüberliegende Vertiefungen des Batteriegehäuses entsprechen, die als Verbindungsnuten ausgeführt sind.

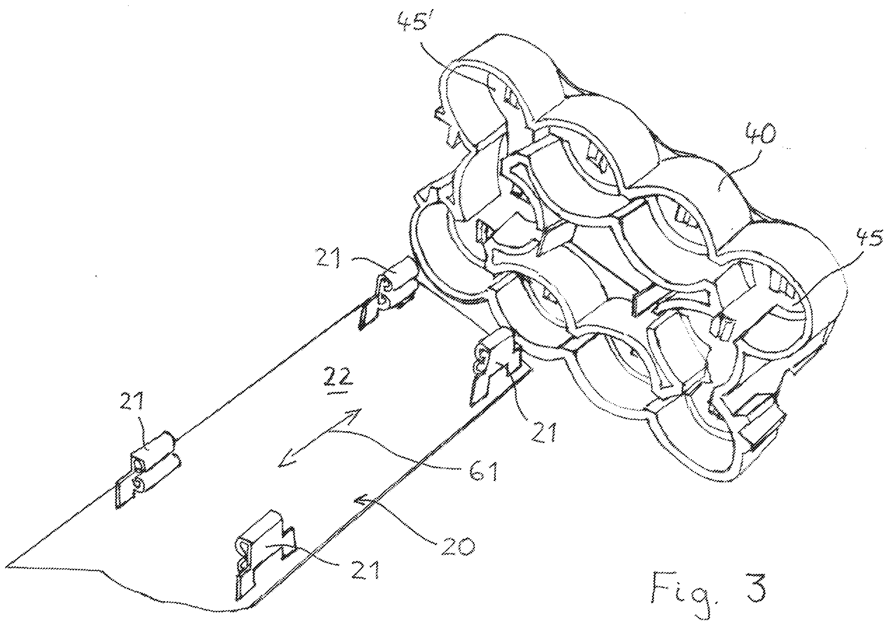

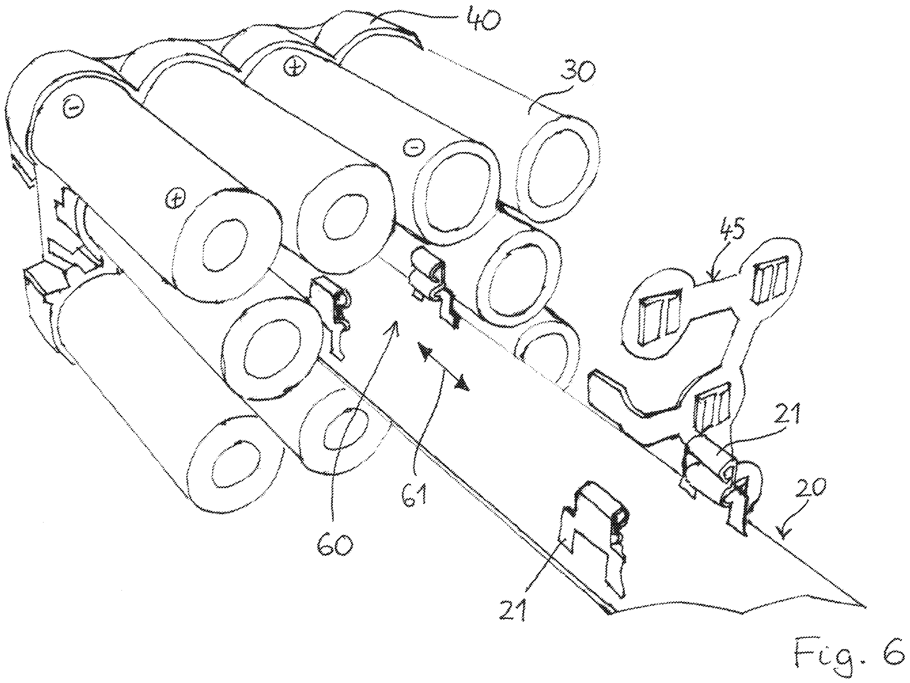

Das Innere der inneren Lage von Batteriezellen 30 bildet einen Luftkanal 60, durch den Luft strömen kann und in dem das BMS 20 mit den BMS-Kontakten 21 angeordnet ist. Der Luftkanal 60 ist unter anderem in Fig. 6, 8, 9 und 24 bezeichnet. Die entstehenden Luftströmung 61 ist beispielsweise in den Figuren 3 bis 10, 15 und 16 angedeutet, wobei sowohl die Strömung durch den Luftkanal als auch eine Rück- oder Gegenströmung durch Doppelfeile angedeutet ist.

Die Fahrzeugbatterie 1 und ein Zusammenbau der Fahrzeugbatterie wird im Folgenden unter Bezugnahme auf die Figuren 1 bis 20 näher erläutert.

Fig. 1 zeigt einen Batteriestapel 31 in einem zusammengebauten Zustand, der eine in Längsrichtung gestapelte Batterieanordnung aufweist, die insgesamt sieben Batteriebündel aus zehn Batteriezellen 30 aufweist, wobei die Batteriebündel in Längsrichtung der Batteriezellen 30 gestapelt sind. Von den zehn Batteriezellen 30 eines Batteriebündels sind jeweils sechs Batteriezellen 30 in Fig. 1 gezeigt. An den gegenüberliegenden Enden des Batteriestapels 31 sind die Batteriezellen 30 jeweils mechanisch miteinander durch eine Endhülsenplatte 40 miteinander verbunden. Weiterhin sind in Fig. 1 die Verbindungshülsenplatten 35 erkennbar, durch welche die Batteriebündel untereinander mechanische verbunden sind. Die Endhülsenplatten 40 und die Verbindungshülsenplatten 35 sind jeweils vorzugsweise in einem Stück und vorzugsweise aus Plastik gefertigt, beispielsweise durch ein Kunststoff-Gussverfahren.

Fig. 2 zeigt weitere Einzelheiten der Endhülsenplatte 40 und der Leadframes 45. Die Endhülsenplatte 40 weist in ihrer Mitte eine rechteckige Öffnung 43 auf. Durch die rechteckige Öffnung 43 kann zum einen ein Luftaustausch erfolgen und zum anderen ein Batteriemanagement-System eingesetzt werden.

Weiterhin weist die Endhülsenplatte 40 insgesamt zehn zylindrische Aufnahmebereiche 41 auf, die durch Wandungen 39 gebildet werden, die an den Stellen, an denen sich zylindrische Aufnahmebereiche 41 berühren, die zu einer gemeinsamen Gruppe von fünf Aufnahmebereichen 41 gehören, jeweils eine Kontaktierungslücke aufweisen. Die Aufnahmebereiche 41 sind entsprechend der weiter oben im Zusammenhang mit Fig. 24 beschriebenen Batterieanordnung angeordnet. Die Aufnahmebereiche 41 haben in ihrer Mitte jeweils eine kreisförmige Öffnung 44.

Gemäß der Batterieanordnung ist eine erste Gruppe von fünf Batteriezellen 30 und eine zweite Gruppe von Batteriezellen 30 jeweils so angeordnet, dass sich die Batteriezellen 30 in den Ecken eines Linienzugs befinden, der die Form eines Großbuchstabens Sigma (∑) bildet. Zwei Leadframes 45, 45' die entsprechend diesem Linienzug geformt sind, sind zueinander symmetrisch in den Aufnahmebereichen 41 angeordnet.

Und zwar weisen die Leadframes 45, 45' an den Ecken des Sigma-förmigen Linienzugs fünf Landepads 47 auf, die über Leitungsstege 48 miteinander verbunden sind. Die Landepads 47 weisen Federelemente 49 auf. An dem mittleren der fünf Landepads 47 ist eine Fahne 46 angeordnet. Die Leadframes 45, 45' sind gleich geformt mit der einzigen Ausnahme, dass bei dem einen Leadframe 45 die Federelemente 49 in dieselbe Richtung wie die Fahne 46 weisen, wogegen sie bei dem anderen Leadframe 45' in die entgegengesetzte Richtung der Fahne 46 weisen.

Die Leadframes bestehen aus einem leitfähigen Material, vorzugsweise aus Metall. Sie können aus einem Metallblech ausgestanzt sein, wobei für die Leadframes 45, 45' dieselbe Stanzform verwendet werden kann. Da die Leadframes 45, 45' im Wesentlichen baugleich sind, werden sie im Folgenden auch mit derselben Bezugsziffer bezeichnet.

Fig. 3 zeigt eine Hülsenendplatte 40 mit darin eingesetzten Leadframes 45, 45' und das BMS 20. Das BMS 20 weist eine BMS Gehäuse auf, auf dem Paare von spiegelsymmetrisch zueinander angeordnete BMS-Kontakte 21 in regelmäßigen Abständen entlang des BMS Gehäuses 22 angeordnet sind. Das BMS-Gehäuse 22 weist eine Leiterplatte bzw. Platine mit einer Elektronik auf, die mit den BSM Kontakten elektrisch verbunden ist, und die in Fig. 3 nicht gezeigt ist. Insbesondere kann das BMS-Gehäuse 22 durch die Leiterplatte gebildet sein.

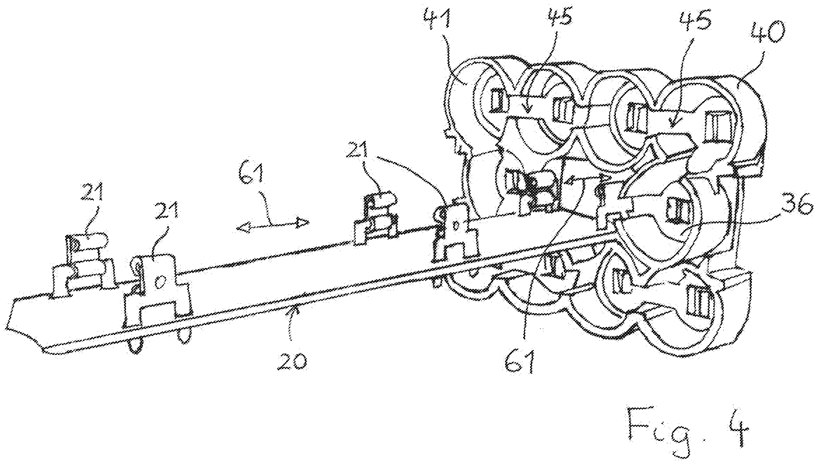

Fig. 4 zeigt dieselben Elemente von Fig. 4 in einer Ansicht, in der die BMS-Kontakte 21 besser erkennbar sind. Insgesamt sind in Fig. 4 drei Paare von BMS-Kontakten 21 gezeigt, von denen das hinterste Paar gegenüber von Kontaktierungslücken der zylindrischen Aufnahmebereiche 41 der Endhülsenplatte 40 angeordnet ist.

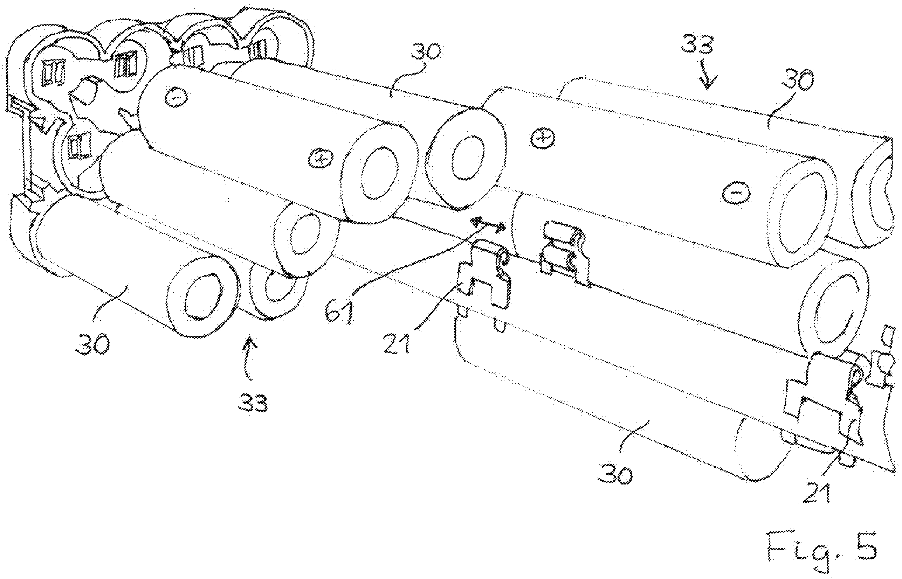

Fig. 5 zeigt die Elemente von Fig. 4 und eine erste Gruppe 33 von Batteriezellen 30, die so angeordnet sind, dass der Minuspol in Fig. 5 nach hinten weist und der Pluspol in Fig. 5 nach vorn weist, und eine zweite Gruppe 33 von Batterien, die so angeordnet sind, dass der Pluspol in Fig. 5 nach hinten weist und der Minuspol in Fig. 5 nach vorn weist.

Standardmäßig entspricht der Minuspol einer glatten Endfläche einer Batteriezelle 30 und der Pluspol einem Pin der Batteriezelle 30, so dass die Pins jeweils in Kontakt mit den Federelementen 49 sind. Durch die entgegengesetzte Polung der beiden Gruppen 33 von Batteriezellen 30 kann ein einzelner zweipoliger Stecker zweckmäßig an einem Ende der Fahrzeugbatterie angeordnet sein. Wie bereits weiter oben erläutert sind die Batteriezellen 30, die zu derselben Gruppe 33 von Batterien durch die Leadframes 45 zueinander parallelgeschaltet.

Fig. 6 zeigt die Element von Fig. 5 im zusammengebauten Zustand und zusätzlich eine Leadframe 45.

Fig. 7 zeigt das Leadframe 45 von Fig. 6 im eingebauten Zustand und eine Verbindungshülsenplatte 35 bevor sie auf die Batteriezellen 30 aufgesetzt ist.

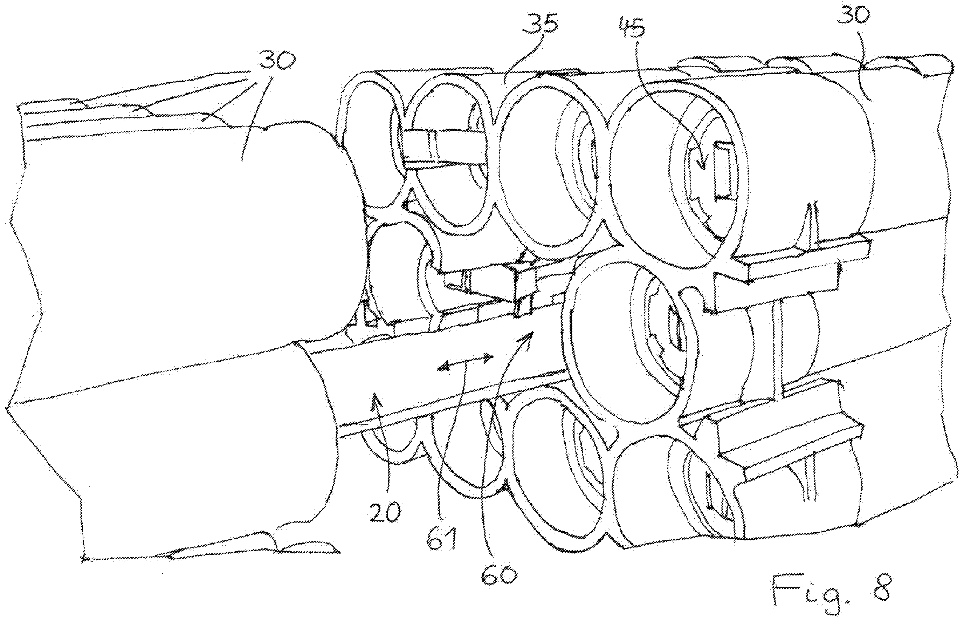

Fig. 8 zeigt die Verbindungshülsenplatte 35 im aufgesetzten Zustand und auf der linken Seite ein zweites Bündel von Batteriezellen 30 vor dem Einsetzen in die Verbindungshülsenplatte.

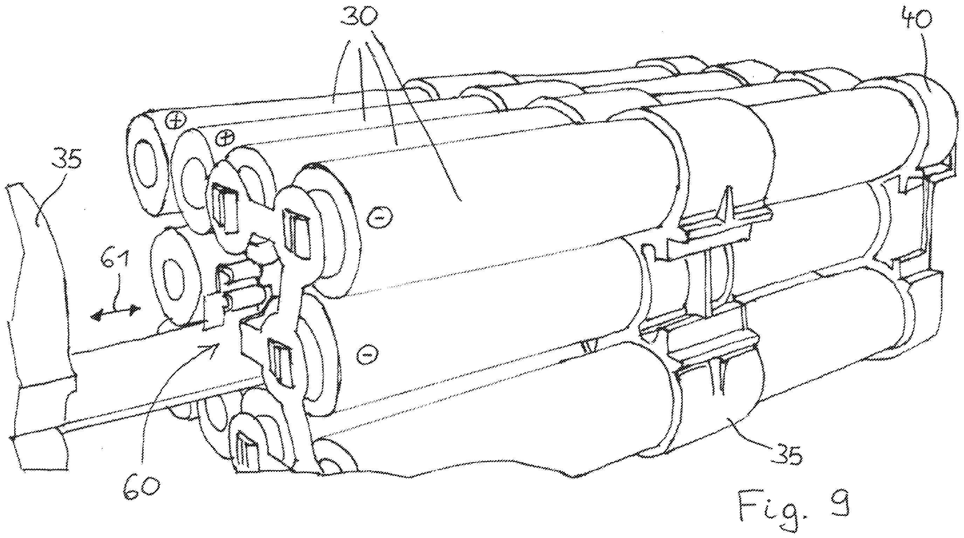

Fig. 9 zeigt das zweite Bündel von Batteriezellen 30 im eingesetzten Zustand und ein weiteres Leadframe sowie eine zweite Verbindungshülsenplatte 35.

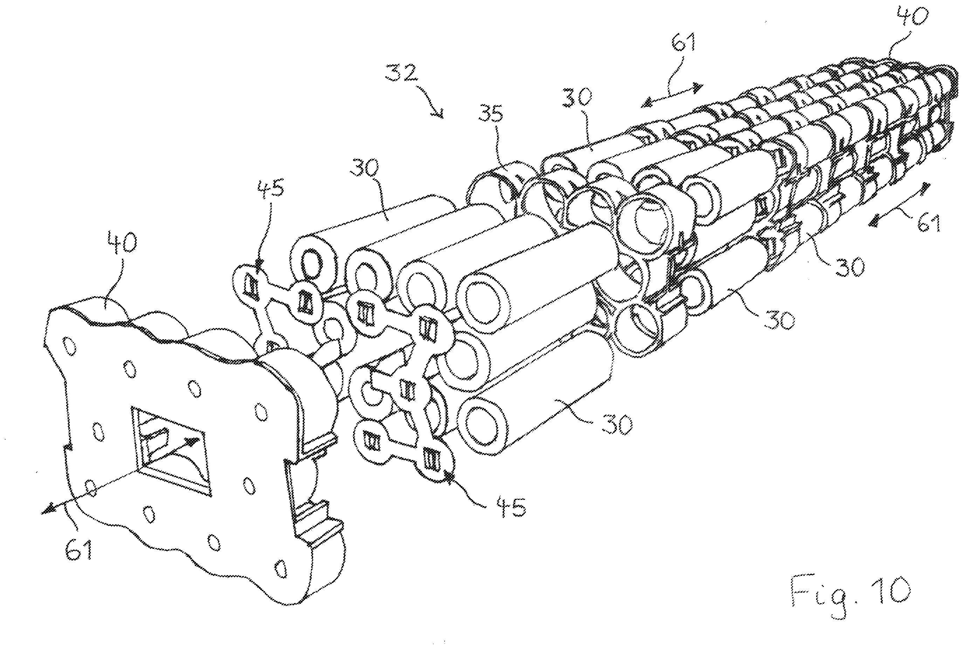

Fig. 10 zeigt den gesamten Batteriestapel 32 im teilweise zusammengebauten Zustand, in dem die weitere Endplatte 40 zu erkennen ist. Durch die äußeren Zwischenräume zwischen den außenliegenden Batterien und durch den Zwischenraum zwischen den äußeren Batterien und dem Gehäuse 5 wird ein Gegenkanal gebildet durch den die durch den Luftkanal 60 geleitete Luft wieder zurückströmen kann. Dadurch ist es nicht erforderlich, in den Gehäusedeckeln 10, 15 Öffnungen für die Luftzufuhr vorzusehen, wenngleich solche Öffnungen zusätzlich vorgesehen werden kann.

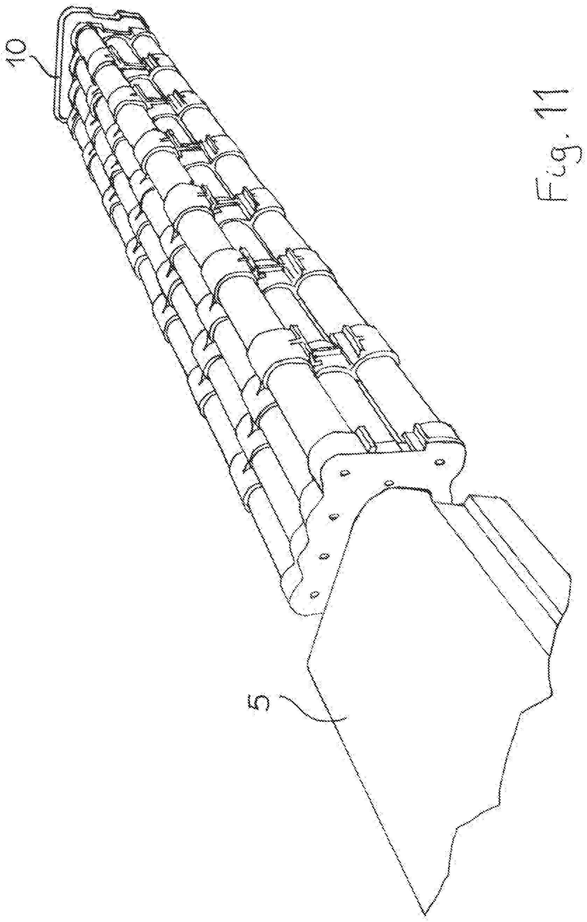

Fig. 11 zeigt den Batteriestapel 32 im zusammengebauten Zustand und weiterhin den ersten Gehäusedeckel 10 und das Batteriegehäuse 5.

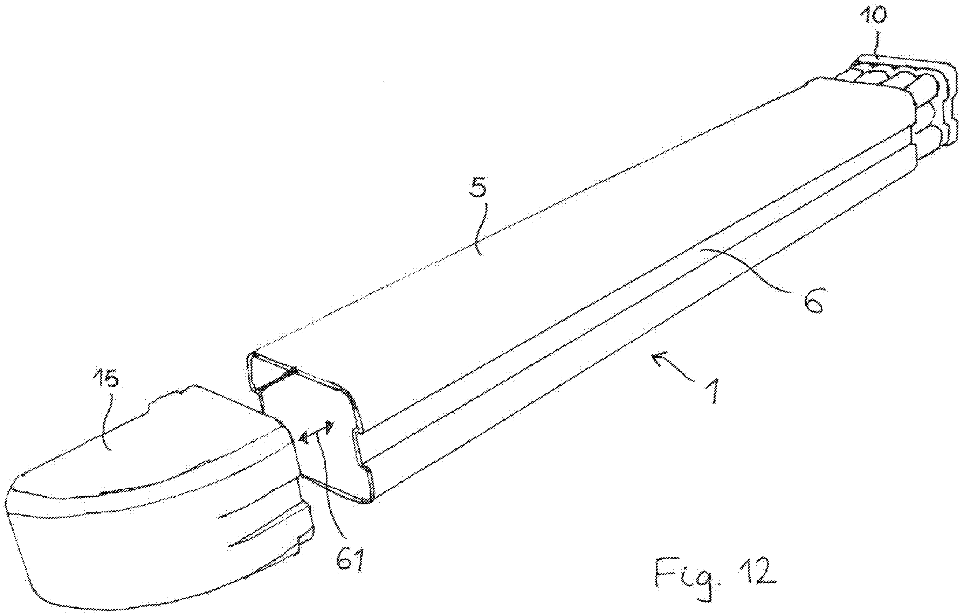

Fig. 12 zeigt das Batteriegehäuse 5 mit teilweise darin eingesetztem Batteriestapel 32 und dem zweiten Gehäusedeckel 15. Das Batteriegehäuse 5 weist an zwei gegenüberliegenden Seiten Befestigungsnuten 6 auf, die sich über die Länge des Batteriegehäuses 6 erstrecken.

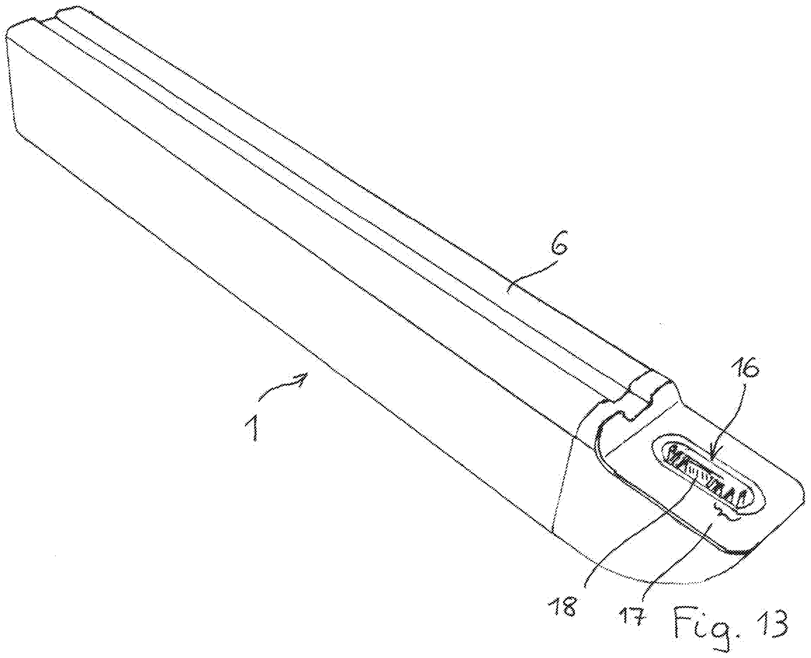

Fig. 13 zeigt die Fahrzeugbatterie 1 im zusammengebauten Zustand. In Fig. 13 ist der Anschlussstecker 16 mit den Stromversorgungsanschlüssen 17 und den Mess- und Steuerungsanschlüssen 18 gezeigt. Der Anschlussstecker 16 befindet sich in einer ovalen Öffnung des zweiten Gehäusedeckels 15.

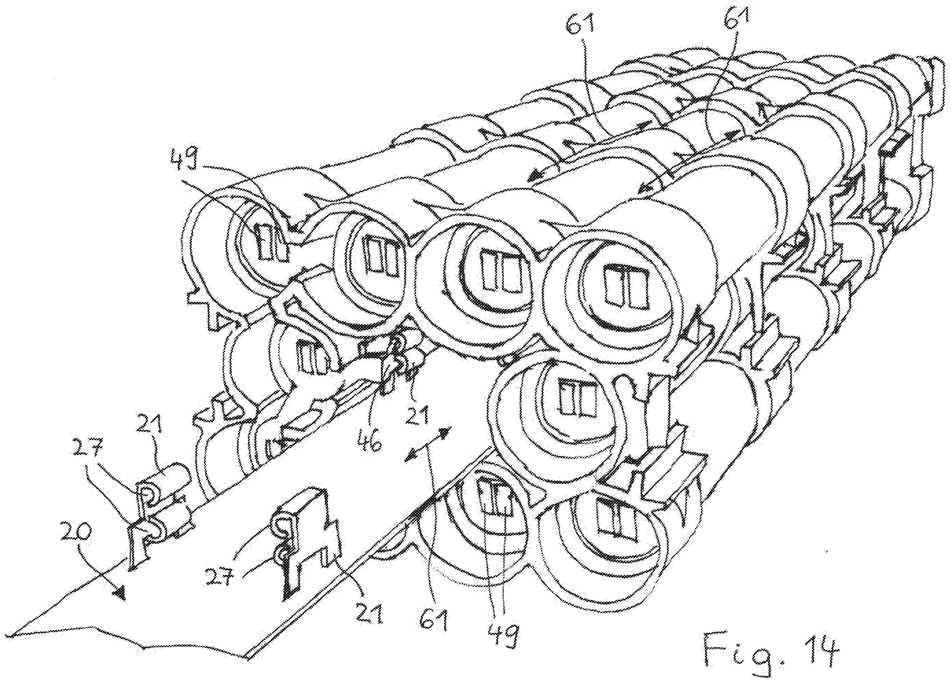

Fig. 14 zeigt vier Bündel von Batteriezellen 30 im eingebauten Zustand, wobei insbesondere erkennbar ist, dass die Fahnen 46 der Leadframes 45 jeweils in dazu entsprechende BMS-Kontakte 21 eingreifen. Der BMS-Kontakt 21 weist Federelemente 27, durch welche die Fahne 46 eines Leadframes 45 an einen flächigen Bereich des BMS-Kontakts 21 angedrückt wird.

Fig. 15 zeigt einen Batteriestapel 32 im zusammengebauten Zustand, mit darauf aufgesetzten Gehäusedeckeln 10, 15. Aus Gründen der Übersichtlichkeit ist in Fig. 15 das Batteriegehäuse 5 fortgelassen. Der zweite Gehäusedeckel 15 ist an einer Seite abgerundet, so dass er einfach an der Seite eines Tretlagers in einen Fahrradrahmen eingesetzt werden kann.

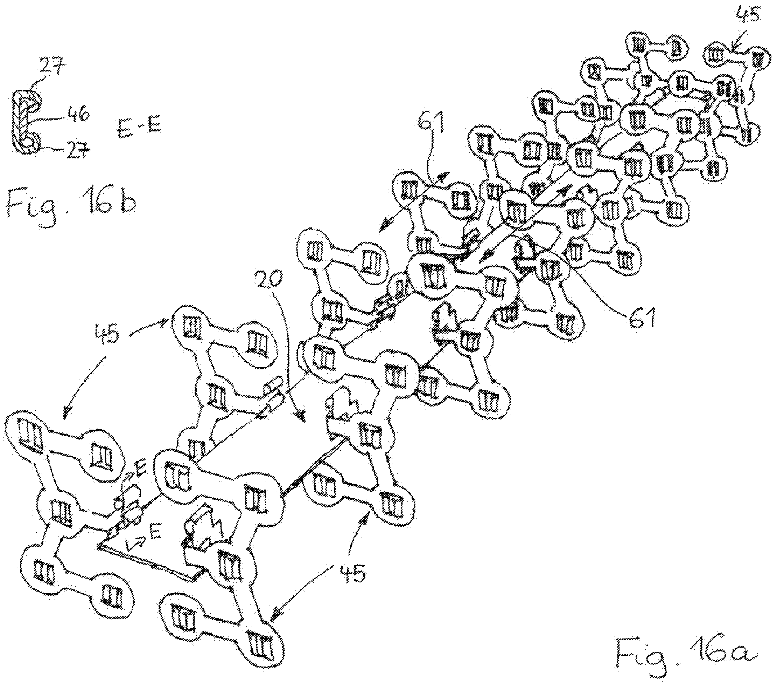

Fig. 16a zeigt das BMS 20 mit den Paaren von BMS-Kontakten 21, in die jeweils Kontaktfahnen 46 der Leadframes 45 eingesetzt sind. Wie in Fig. 16 erkennbar werden für eine gegebene Anzahl N von in Serie geschalteten Bündeln von Batterien N + 1 Paare von Leadframes und N + 1 Paare von BMS-Kontakten 21 benötigt.

Die Figur 16b zeigt einen Querschnitt durch einen BMS-Kontakt 21, in den eine Kontaktfahne 46 eingesetzt ist.

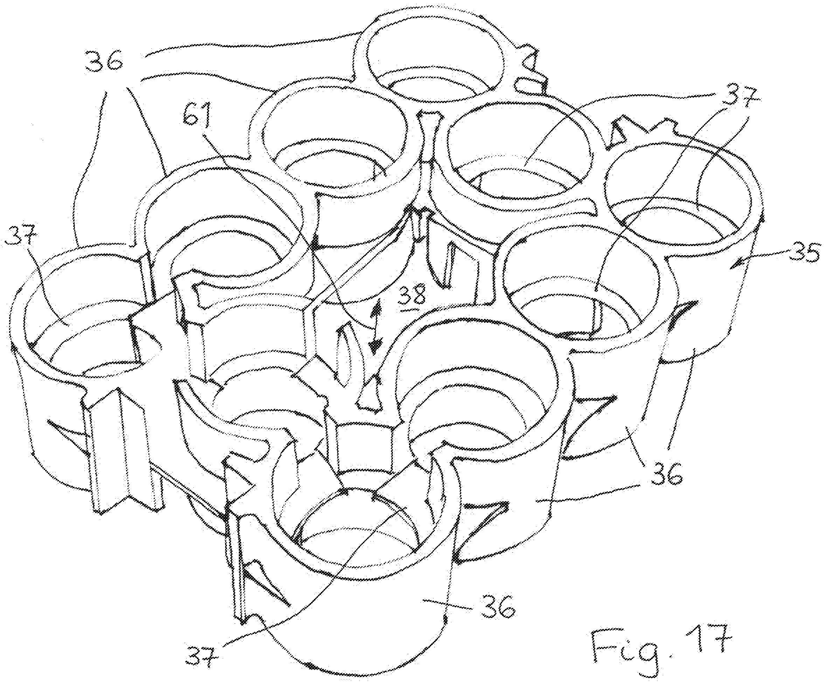

Die Fig. 17 zeigt eine Verbindungshülsenplatte 35. Die Verbindungshülsenplatte 35 weist an zwei gegenüberliegenden Seiten jeweils zylindrische Aufnahmebereiche 36 auf, die durch ringförmige Anschläge 37 voneinander getrennt sind. Die zylindrischen Aufnahmebereiche 36 sind durch Wandungen gebildet. Diese Wandungen weisen jeweils eine Kontaktierungslücke auf, wo sich Aufnahmebereiche 36 einer gemeinsamen Gruppe von fünf Aufnahmebereichen 36 berühren. In der Mitte der Verbindungshülsenplatte ist eine rechteckige Öffnung 38 vorgesehen, die zu dem Luftkanal 60 ausgerichtet ist.

Zwei weitere Kontaktierungslücken sind jeweils zur Kontaktierung mit den BMS-Kontakten 21 vorgesehen. Diese Kontaktierungslücken sind nicht gegenüberliegend angebracht, wie bei der Endhülsenplatte 40, sondern auf gegenüberliegenden Seiten in Bezug auf die Anschläge 37. Dadurch liegen die Leadframes 45, die von gegenüberliegenden Seiten in die Verbindungshülsenplatte 35 eingesetzt sind, jeweils an den flachen Endseiten der Batteriezellen 30 an. Als Folge dieser Anordnung sind die Leadframes 45 in axialer Richtung um die Breite des Anschlags 37 versetzt.

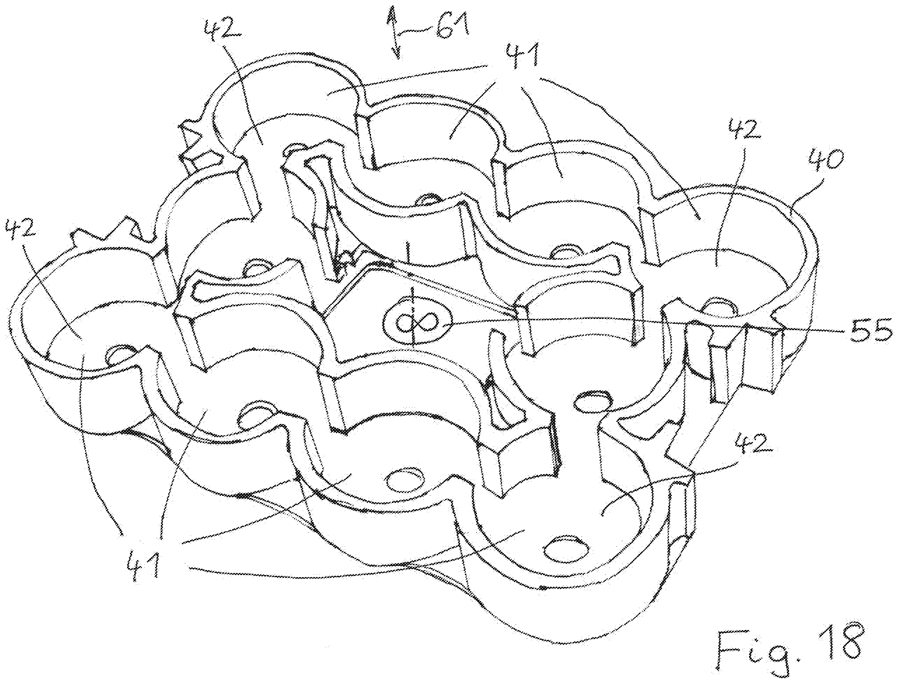

Fig. 18 zeigt eine Endhülsenplatte 40, wobei in der Mitte der Endhülsenplatte 40 schematisch ein Lüfter 55 angedeutet ist, durch den eine Luftbewegung durch den Zwischenraum der Batterieanordnung unterstützt wird. Die Bodenflächen der zylindrischen Aufnahmebereiche 42 sind als Teil einer Endplatte 42 ausgebildet.

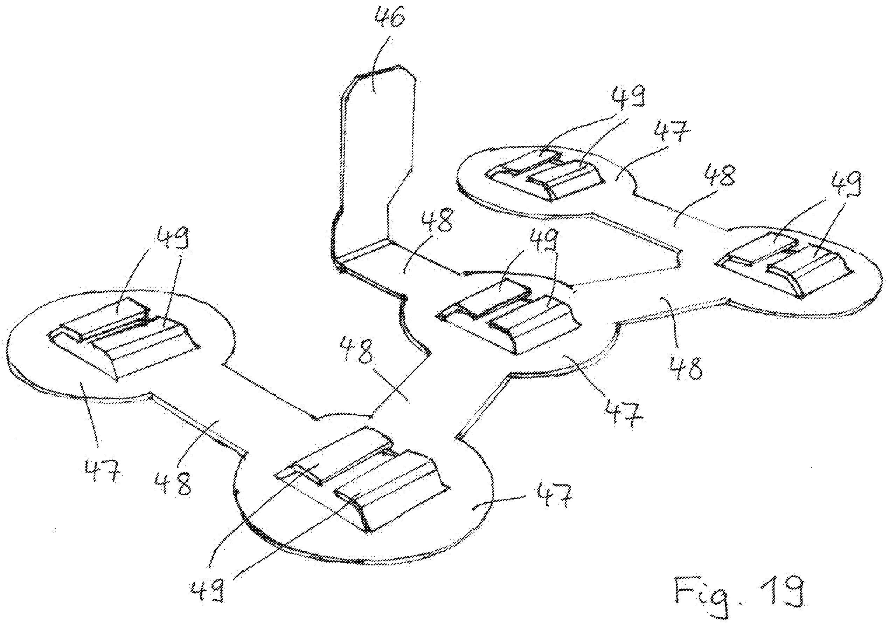

Fig. 19 zeigt ein Leadframe 45 mit den untereinander durch Leitungsstege 48 verbundenen Landepads 45, die jeweils Federelemente 49 aufweisen. Das mittlere Landepad 45 ist über einen weiteren Landesteg 48 mit einer Kontaktfahne 46 verbunden.

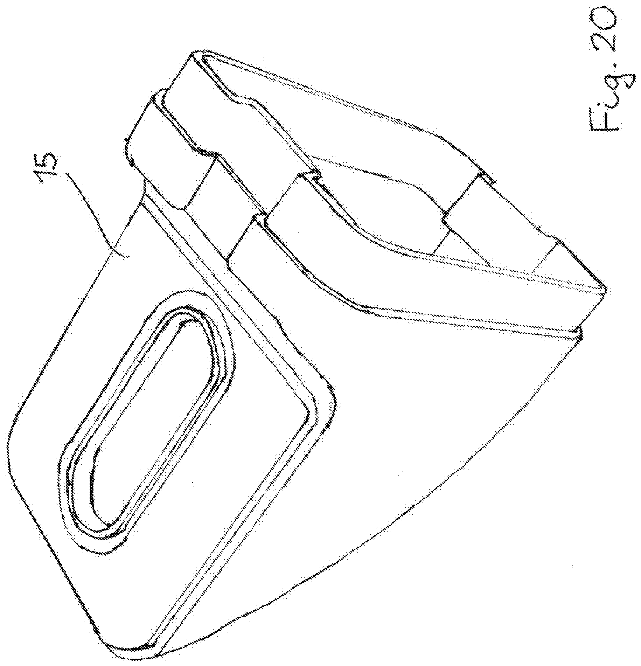

Fig. 20 zeigt den zweiten Gehäusedeckel 15, der einen Absatz zum Einsetzen in das Batteriegehäuse 5 und eine ovale Öffnung zur Aufnahme des Anschlusssteckers aufweist.

Fig. 25 zeigt in beispielhafter Weise eine Schaltkreisanordnung einer BMS-Elektronik 23 des Batteriemanagement-Systems 20 mit sieben Batteriegruppen, wobei der Übersichtlichkeit halber nur jeweils eine Batteriezelle 30 von einer von zwei Gruppen von parallel geschalteten Batteriezellen 30 gezeigt ist. Gemäß dieser Schaltkreisanordnung ist jeweils eine Spule 25 parallel zu der Batteriezelle 30 geschaltet, die durch einen steuerbaren Schalter 26 zu- und abgeschaltet werden kann, der in Reihe zu der Spule 25 geschaltet ist. Der Schalter 26 kann beispielsweise durch ein Relais oder eine schaltbare Halbleiterkomponente gebildet sein.

Die Pole der Batteriezellen 30 sind jeweils mit Messanschlüssen verbunden, die mit einem BMS-Controller 24 elektrisch verbunden sind. Die Schalter 26 sind ebenfalls mit dem BMS-Controller 24 verbunden. Der BMS-Kontroller 24 kann beispielsweise durch einen Microcontroller gebildet sein, der auf einer Platine des BMS 20 angeordnet ist.

Die elektrische Verbindung der in Fig. 25 gezeigten elektronischen Komponenten mit den Batteriezellen 30 bzw. mit den Gruppen von parallel verbundenen Batteriezellen 30 wird jeweils durch einen BMS-Kontakt 21 bewirkt, der mit einem Leadframe 45 verbunden ist, der seinerseits zwischen zwei Polen von in Serie geschalteten Batteriezellen 30 angeordnet ist.

In dem Beispiel von Fig. 25 ist der Pluspol der in Serie geschalteten Anordnung von Batteriezellen 30 mit Masse verbunden. Bei einem Fahrzeug kann dies beispielsweise dadurch erreicht werden, dass der jeweilige Pol über eine leitfähige Verbindung mit einem Fahrzeugrahmen verbunden ist. Die Masse kann aber auch durch einen leitfähigen Bereich des BMS 20 gebildet werden.

Optional kann ein in Fig. 25 nicht gezeigter Lüfter vorhanden sein, der über Anschlüsse mit den Batteriezellen 30 verbunden ist und über eine Steuerleitung mit dem BMS-Controller 24 verbunden ist.

In der Anordnung von Fig. 1 bis 24 entspricht einer einzelnen in Fig. 25 gezeigten Batteriezelle 30 jeweils eine Gruppe von fünf parallel geschalteten Batteriezellen 30. Weiterhin ist die in Fig. 25 gezeigte Anordnung für jede Anordnung von seriell geschalteten Gruppen von parallel geschalteten Batteriezellen 30 vorhanden.

Eine solche Anordnung aus in Reihe geschalteten Gruppen von Batteriezellen 30, die untereinander parallelgeschaltet sind, wird auch als Teilstapel 34 von Batteriezellen 30 bezeichnet. Dabei ist vorzugsweise nur ein gemeinsamer BMS-Controller 24 für alle Teilstapel 34 vorhanden.

Im Ausführungsbeispiel der Fig. 1 bis 24 besteht ein Teilstapel 34 aus sieben Gruppen von Batteriezellen 30, die in Fig. 25 jeweils durch eine einzelne Batteriezelle 30 symbolisiert sind. Somit sind zwei Teilstapel aus jeweils sieben Gruppen von Batterien vorhanden, die jeweils aus fünf parallel geschalteten Batterien bestehen. Dies zwei Teilstapel aus 35 Batterien sind an dem Ende, das dem Außenstecker gegenüberliegt, in Reihe miteinander geschaltet, in dem die Leadframes an diesem Ende elektrisch miteinander verbunden sind, so dass der Gleichstrom U-förmig über die Batteriegruppen von dem einen Kontakt des Außensteckers zu dem anderen Kontakt des Außensteckers zurückgeleitet wird.

Die Batteriezellen 30 haben insgesamt acht Pole, denen acht Anschlüsse entsprechen, die in Fig. 25 mit 1 bis 8 durchnummeriert sind. Für diese acht Anschlüsse sind acht Leadframes 45 vorhanden.

Zweckmäßigerweise ist eine gerade Anzahl von Teilstapeln vorhanden, die untereinander seriell verbunden sind, so dass keine elektrische Rückleitung erforderlich ist, um den Pluspol oder den Minuspol des gesamten Batteriestapels 32 zu der Steckverbindung zurückzuführen.

Anstelle der in Fig. 25 gezeigten Anordnung können auch andere Schaltungsanordnungen verwendet werden, die einen Schutz vor Überladung der Batteriegruppen und/oder einen Ladungsausgleich zwischen einzelnen Batteriegruppen während eines Entladevorgangs und während eines Ladevorgangs bewirken. Fig. 25 zeigt eine besonders einfache Anordnung. Es sind auch aufwendigere Anordnungen möglich, die weitere elektrische Verbindungen und weitere Komponenten wie beispielsweise weitere Spulen, Kondensatoren und regelbare Gleichstromwandler enthalten.

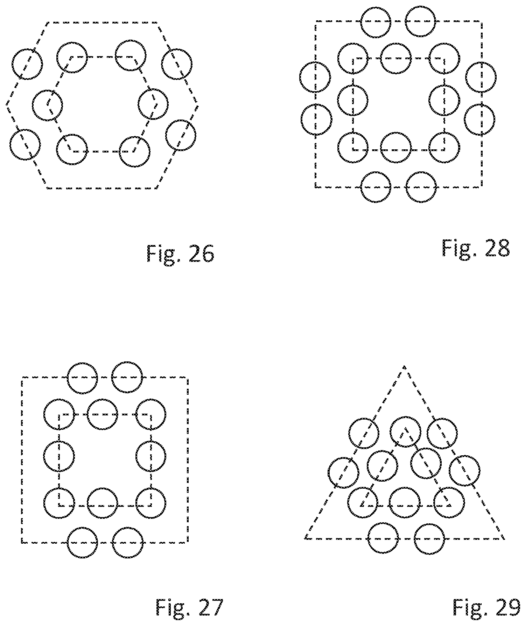

Fig. 26 zeigt schematisch die Anordnung von Batterien von Fig. 1 bis 24, die beispielsweise auch in Fig. 24 gezeigt ist, wobei die Anordnung gegenüber Fig. 24 um 90 Grad gedreht ist. Dabei ist der Einfachheit halber nicht gezeigt, welche Batteriezellen parallelgeschaltet sind.

Fig. 27 zeigt eine weitere Anordnung von Batteriezellen, bei der eine innere Lage von acht Batteriezellen ein Quadrat bildet, und bei der eine äußere Lage aus vier Batteriezellen vorhanden ist, die sich an die innere Lage anschließt.

Fig. 28 zeigt eine weitere Anordnung von Batteriezellen, bei der eine innere Lage von acht Batteriezellen ein Quadrat bildet, und bei der eine äußere Lage aus acht Batteriezellen vorhanden ist, die sich an die innere Lage anschließt.

Fig. 29 zeigt eine weitere Anordnung von Batteriezellen, bei der eine innere Lage von sechs Batteriezellen ein regelmäßiges Dreieck bildet, und bei der eine äußere Lage aus sechs Batteriezellen vorhanden ist, die sich an die innere Lage anschließt.

Anstatt der in Fig. 1 bis 24 und 26 gezeigten Anordnung von Batteriezellen kann auch eine der Anordnungen von Fig. 27 bis 29 oder eine dazu ähnliche Anordnung verwendet werden, wobei die Anordnung so gestaltet ist, dass jede Batterie zumindest mit einem Außenraum der Anordnung oder mit einem Innenraum der Anordnung in Verbindung steht. Zweckmäßigerweise ist die Anordnung für jedes Bündel von Batterien gleich, so dass sich die Pole von seriell verschalteten Batteriezellen gegenüberliegen.

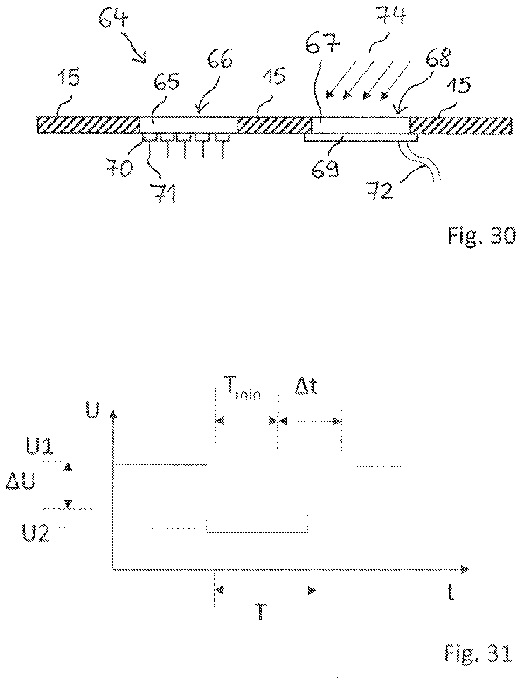

Die Querschnittszeichnung von Fig. 30 zeigt eine Ladezustandsanzeige 64 mit einem optischen Sensor 69, die an dem Batteriegehäuse 5 angebracht ist. Ein Sichtfenster 65 ist wasserdicht in einer ersten Öffnung 66 des zweiten Gehäusedeckels 15 eingesetzt. Hinter dem Sichtfenster 66 im Inneren des Batteriegehäuses 5 befinden sich Anzeigedioden 70, die jeweils mit Anschlüssen 71 an die hier nicht gezeigte Elektronik X der Fahrzeugbatterie 1 angeschlossen sind. In Fig. 30 sind beispielhaft fünf Anzeigedioden 70 mit den jeweiligen Anschlüssen 71 gezeigt.

Ein Sensorfenster 67 ist ebenfalls wasserdicht in einer zweiten Öffnung 68 des zweiten Gehäusedeckels 15 eingesetzt. Der optische Sensor 69, der beispielsweise durch eine Fotodiode 69 realisiert sein kann, ist hinter dem Sichtfenster 67 im Innern des Batteriegehäuses angebracht und über Anschlusskabel 72 mit der Elektronik 23 der Fahrzeugbatterie 1 verbunden.

Insbesondere können das Sichtfenster 64 und das Sensorfenster 65 zur Abdichtung mit dem Batteriegehäuse 5 verklebt oder verschweißt sein und die Öffnungen 66, 68 können zur besseren Abdichtung Stufen aufweisen, in die das Sichtfenster und das Sensorfenster jeweils eingesetzt sind. Zum Schutz des Sichtfensters 64 und des Sensorfensters 67 können jeweils Abdeckungen wie beispielsweise Schieber oder Klappen an dem Batteriegehäuse 5 vorgesehen sein.

Die Ladezustandsanzeige 64 kann statt an einer Seite des zweiten Batteriedeckels 15 auch an einer der anderen Seiten des Batteriegehäuses 5 angeordnet sein. Anders als in Fig. 30 gezeigt können die Anzeigedioden auch an die Oberfläche des Gehäuses herausgeführt sein anstatt hinter einem Sichtfenster angeordnet zu sein.

Gemäß einer Ausführungsform ist der optische Sensor 69 im eingebauten Zustand verdeckt, damit die Ladezustandsanzeige 64 nicht versehentlich aktiviert wird und dadurch unnötig Strom verbraucht. Zum Beispiel kann dies dadurch bewirkt werden, dass die Anzeige auf derselben Fläche wie der Steckeranschluss 16 angeordnet ist, wobei diese Fläche im eingebauten Zustand an einer gegenüberliegenden Fläche des Elektrofahrzeugs anliegt und somit verdeckt ist.

Gemäß einer weiteren Ausführungsform wird der eingebaute Zustand der Fahrzeugbatterie 1 elektronisch erkannt, beispielsweise durch eine Erkennung einer Impedanzänderung beim Einsetzen eines Steckers in den Steckeranschluss 16. Wenn der eingebaute Zustand erkannt wird, wird die Zustandsanzeige abgeschaltet.

Die Funktion der Ladezustandsanzeige von Fig. 30 wird im Folgenden unter Bezug auf Fig. 30 und Fig. 31 erläutert. Fig. 31 ist eine schematische Darstellung eines Spannungsverlaufs, der durch den Fotosensor 69 erzeugt wird, wobei die Spannung und die Zeit in willkürlichen Einheiten aufgetragen sind.

Wenn die in Fig. 30 gezeigte Seite der Batterie einer Beleuchtung 74 ausgesetzt wird, erzeugt der optische Sensor 69 eine Spannung U1. Die Beleuchtung 47 kann beispielsweise durch eine Raumbeleuchtung oder durch Sonneneinstrahlung bewirkt werden.

Wenn ein Benutzer das Sensorfenster ganz oder teilweise abdeckt erniedrigt sich die von dem optischen Sensor 69 erzeugte Spannung auf einen Wert U2.

Den Spannungswerten U1 und U2 entsprechen im Allgemeinen keine vordefinierten Spannungswerte, sondern sie hängen unter anderem von der Intensität der Lichteinstrahlung 74, von der Durchlässigkeit des Sensorfensters 67, von der Sensorempfindlichkeit des Fotosensors 69 und von dem Grad der Abdeckung des Sensorfensters 67 ab.

Gemäß dem Beispiel der Figur 31 wird eine Anzeige eines Batterieladezustands dadurch ausgelöst, dass eine Spannung der Fotodiode um mindestens eine vorgegebene Spannungsdifferenz ΔU von einem oberen Spannungswert U1 auf einen unteren Spannungswert abfällt und innerhalb einer vorgegebenen Toleranz bezüglich der Spannung U für mindestens die Zeit T min und maximal die Zeit T max auf dem unteren Spannungswert U1 verbleibt, und danach um mindestens die vorgegebene Spannungsdifferenz ΔU wieder ansteigt.

Insbesondere kann die Zeit T min in der Größenordnung von einer oder mehreren Sekunden liegen. Die Spannung U1 kann beispielsweise 0,6 Volt betragen, wenn der Fotosensor 69 durch eine Fotodiode realisiert wird. Bei der Spannung U kann es sich um eine direkt an dem Fotosensor anliegende Spannung handeln oder auch um Spannung, die durch einen Signalverarbeitungsschaltkreis davon abgeleitet ist. Die Spannung U1 und die Spannungsdifferenz können beispielsweise in der Größenordnung von einigen Zehntelvolt oder einigen Volt liegen aber auch geringer sein, insbesondere wenn die Spannung eine abgeleitete Spannung ist.

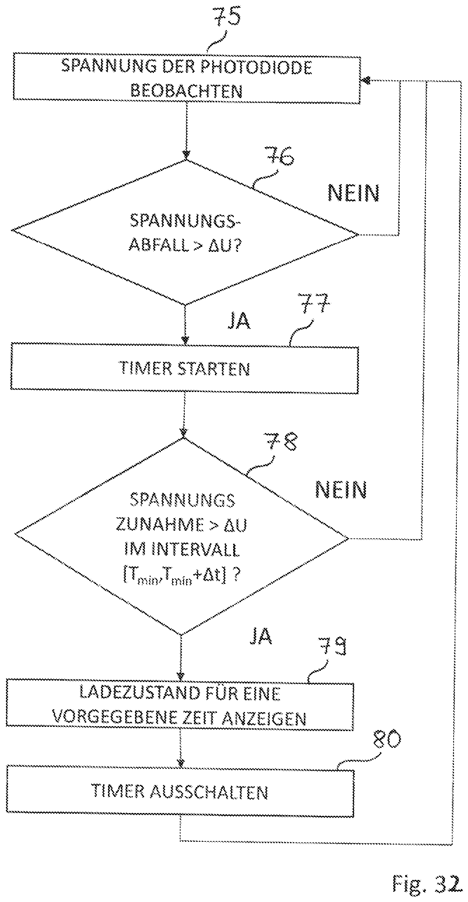

Der Spannungsverlauf an dem Fotosensor braucht nicht exakt rechteckförmig zu verlaufen, wie in der Fig. 32 gezeigt, sondern die Spannung U kann auch über einen Zeitraum abfallen und ansteigen. Ebenso braucht die Spannung nicht exakt auf dem unteren bzw. oberen Wert der Spannung zu bleiben, sondern die obere Spannung U1 und die untere Spannung U2 kann innerhalb einer vorgegebenen Toleranz variieren. Weiterhin braucht die Spannung nach dem Spannungsabfall nicht wieder exakt auf den vorherigen Wert U1 anzusteigen.

Ebenso kann das Kriterium für den Spannungsabfall von einem einfachen Schwellwertkriterium abweichen und beispielsweise auch den Verlauf der Spannungskurve mitberücksichtigen, um eine absteigende Flanke und eine ansteigende Flanke des Spannungsverlaufs zu erkennen.

Die Aktivierung der der Ladezustandsanzeige 64 von Fig. 30 wird im Folgenden unter Bezug auf die beispielhafte Ausführungsform der Fig. 32 in einer beispielhaften Ausführungsform in weiterem Detail erläutert.

In einem Verfahrensschritt 75 wird eine Beobachtung der Spannung des Fotosensors 69 gestartet. Diese Beobachtung der Spannung des Fotosensors 69 kann insbesondere auch ständig ablaufen, insbesondere dann, wenn diese Beobachtung ohne Verbrauch von Batteriestrom der Fahrzeugbatterie 1 erfolgt. In einem ersten Entscheidungsschritt 76 wird erkannt, ob die Spannung um mehr als die vorgegebene Differenz ΔU abgefallen ist. Wenn nicht, wird die Beobachtung der Spannung im Schritt 75 fortgesetzt.

Andernfalls wird in einem Verfahrensschritt 77 ein Zeitgeber gestartet. Dieser Zeitgeber braucht nicht über einen Schwingquarz zu verfügen wie bei einem handelsüblichen Mikroprozessor, sondern die Zeitdauer kann in einem einfachen Ausführungsbeispiel über eine Kondensatorentladung bestimmt werden. Der Zeitgeber kann auch eine Anordnung aus Transistoren und anderen Bauelemente wie Widerständen, Kondensatoren und/oder Induktivitäten aufweisen, wie beispielsweise einen NE555 Mikrochip. Gemäß einem speziellen Ausführungsbeispiel werden über eine astabile Kippschaltung Zeitgeberpulse erzeugt, die anschließend über einen Integrator integriert werden. Vorteilhafterweise ist der Zeitgeber bzw. die Zeitmessvorrichtung so ausgeführt, dass bei ausreichender Genauigkeit möglichst wenig Strom verbraucht wird.

Mithilfe des Zeitgebers wird in einem zweiten Entscheidungsschritt 78 automatisch bestimmt, ob innerhalb des vorgegebenen Zeitintervalls [T_min, T_min+Δt] die Spannung wieder um mindestens die vorgegebene Differenz ΔU ansteigt. Wenn dies der Fall ist, wird der Ladezustand der Fahrzeugbatterie 1 für eine vorgegebene Zeit angezeigt. Danach wird in einem Verfahrensschritt 79 die Anzeige wieder ausgeschaltet und der Zeitgeber wird in einem Verfahrensschritt 80 ebenfalls wieder ausgeschaltet. In beiden Fällen wird die Beobachtung der Spannung des Fotosensors im Schritt 75 anschließend fortgesetzt.

Die Ladezustandsanzeige 64 ermöglicht insbesondere ein bequemes Ablesen des Batterieladezustands der Fahrzeugbatterie 1 im ausgebauten Zustand der Fahrzeugbatterie 1. Wenn die Fahrzeugbatterie 1 dagegen in einem Elektrofahrzeug eingebaut ist kann der Ladezustand im Allgemeinen auch von einer Steuerungseinheit mit Anzeige abgefragt und angezeigt werden, die sich im Sichtbereich eines Fahrers befindet. Die Ladezustandsanzeige 64 benötigt keine bewegliche Auslösemechanik wie Taster oder Schalter, die durch das Batteriegehäuse 5 hindurchgeführt wird. Dies vereinfacht eine wasserdichte Ausführung des Batteriegehäuses 5, um das Innere der Fahrzeugbatterie 1 vor Beschädigung zu schützen. Zudem ist eine Aktivierung der Anzeige ohne bewegliche Teile wie bei den Ausführungsbeispielen der Figuren 30, 32, 34 und 35 verschleißarm und dauerhaft.

Der Ladezustand kann beispielsweise durch eine Anzahl von aufleuchtenden Dioden 70 angezeigt werden, wobei die Anzahl der aufleuchtenden Dioden den Ladezustand anzeigt. Diese Ausführung ist in den Figuren 30, 32, 34, 35 und gezeigt. Der Ladezustand kann auch durch farbige Leuchtelemente, wie beispielsweise farbige LEDs angezeigt werden, die eine Farbcodierung wie beispielsweise rot, orange, gelb, grün verwirklichen. Der Ladezustand kann auch durch ein Display wie beispielsweise ein Flüssigkristalldisplay oder ein Diodendisplay angezeigt werden, das dazu eingerichtet sein kann, eine Zahl oder eine graphische Darstellung wie eine Anzahl von Balken anzuzeigen.

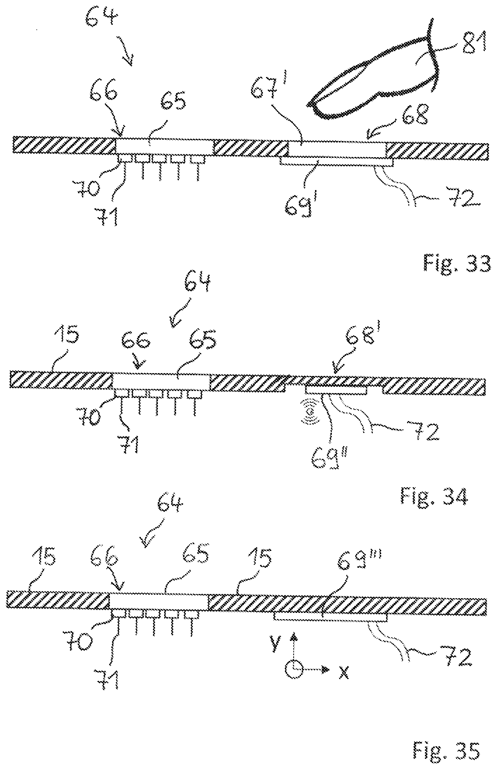

Die Figuren 33 bis 35 zeigen weitere Ausführungsbeispiele einer Ladezustandsanzeige, die gemäß dem Verfahren der Figuren 31 und 32 oder gemäß einem ähnlichen Verfahren oder gemäß einem geeignet modifizierten Verfahren eingesetzt werden können, um eine Ladezustandsanzeige 64 der Fahrzeugbatterie 1 zu aktivieren. Im Zusammenhang mit Fig. 30 bereits beschriebene Elemente werden nachfolgend nicht erneut beschrieben.

Fig. 33 zeigt eine Ladezustandsanzeige mit einem kapazitiven Sensor 69', die an dem Gehäuse der Batteriezelle von Fig. 1 angebracht ist. Der kapazitive Sensor 69' befindet sich hinter einer Abdeckung 67', die nichtleitend ist, und die auch als "Overlay" bezeichnet wird. Beispielsweise kann die Abdeckung 67' Glas, Plexiglas oder auch ein nichttransparentes Plastikmaterial aufweisen.

Wenn ein Benutzer einen Finger 81 in die Nähe der Abdeckung bringt, verändert sich ein von dem kapazitiven Sensor erzeugtes elektrisches Feld, und damit eine an dem Anschluss 72 des kapazitiven Sensors anliegende Spannung. Diese Spannung kann ähnlich zu dem vorher unter Bezug auf Fig. 31, 32 beschriebenen Verfahren ausgewertet werden, wobei die Spannung anstatt auf ein niedrigeres Niveau abzusinken auch auf ein höheres Niveau ansteigen kann. Abweichend hiervon kann auch eine Veränderung einer an den kapazitiven Sensor 69' anliegenden Wechselspannung gemessen werden. In jedem Fall wird eine Zeitdauer bestimmt, in der sich der Benutzerfinger 81 in der Nähe der Abdeckung 67' befindet.

Figur 34 zeigt eine Ladezustandsanzeige mit einem Erschütterungssensor 69", die an dem Gehäuse der Batteriezelle von Fig. 1 angebracht ist. In dem Beispiel von Fig. 34 ist der Erschütterungssensor 68' hinter einem ausgedünnten Bereich des Batteriegehäuses angeordnet. Durch den ausgedünnten Bereich kann eine dort lokal einwirkende Erschütterung wie beispielsweise ein Anklopfsignal leichter erfasst und von einem Umgebungssignal unterschieden werden. Bei der Signalauswertung kann auch ein mehrmaliges Signal wie etwa ein zwei- oder ein dreimaliges Anklopfen erkannt werden.

Der Erschütterungssensor 69'" kann auch an einer Standfläche innen am Batteriegehäuse angebracht sein. In diesem Fall kann die Auswertungselektronik erfassen, wenn ein Benutzer die Batterie auf die Standfläche aufsetzt und dadurch eine Erschütterung auslöst. Die Auswerteelektronik kann weiterhin dazu eingerichtet sein, Umgebungsvibrationen zu erkennen und von einem durch einen Benutzer ausgelöstem Signal zu unterscheiden, beispielsweise durch Erkennung von Amplitude, Frequenz und Wiederholdauer der Umgebungsvibrationen.

Wenn das Signal des Erschütterungssensors einem vorgegebenen Signalprofil oder einem von mehreren vorgegebenen Signalprofilen bzw. Zeitverläufen ähnlich ist, die einem Auslösesignal eines Nutzers entsprechen, wird die Batteriezustandsanzeige 64 für eine vordefinierte Zeitdauer aktiviert. Diese allgemeine Beschreibung des Auslösevorgangs trifft auch für die Ausführungsbeispiele der Figuren 30, 32 und 35 zu.

Fig. 35 zeigt eine Ladezustandsanzeige mit einem Neigungssensor 69"', die an dem Gehäuse der Batteriezelle von Fig. 1 angebracht ist. Der Neigungssensor ist dazu eingerichtet, ein Signal zu erzeugen, wenn das Sichtfenster 65 der Ladezustandsanzeige horizontal ausgerichtet wird. Dies ist insbesondere der Fall, wenn eine der Ladezustandsanzeige 64 gegenüberliegende Fläche auf einer horizontalen Fläche abgestellt wird, beispielsweise wenn ein Nutzer die Fahrzeugbatterie aus einem Lagerregal herausnimmt und auf dem Boden abstellt.

Die Batteriestatusanzeige 64 wird für eine vordefinierte Zeit ausgelöst, wenn das Sensorsignal, das die horizontale Lage anzeigt, für mindestens die Zeit T min konstant bleibt. Im eingebauten Zustand wird die Batterieanzeige dagegen nicht ausgelöst, wenn in diesem Zustand das Sichtfenster 65 nicht senkrecht nach oben zeigt.

Der Neigungssensor 69'" kann beispielsweise durch ein mikroelektromechanisches System (MEMS) mit Testmassen realisiert werden, wie es auch in einem Smartphone Verwendung findet. Zusätzliche oder anstelle der Testmassen kann das MEMS auch ein Gyroskop aufweisen. Durch die Bedingung, dass die Lage für mindestens die Zeit T min konstant bleiben muss, um die Anzeige zu aktivieren, kann jedoch ein statischer Lagesensor für diese Anwendung ausreichend sein, um eine versehentliche Auslösung der Batteriezustandsanzeige zu vermeiden.

[Idee: im eingebauten Zustand nicht ausgerichtet allerdings: man kann sie dann nicht in die Hand nehmen und ablesen. Es sei denn Neigung der Anzeige nur ungefähr parallel zum Boden. Wieder wird eine Triggerbedingung benötigt, denn auf der Ablage soll die Anzeige nicht ausgelöst werden. Trigger: Lage der Anzeige ändert sich zu "ungefähr horizontal" und bleibt mindestens für T min in dieser Lage]

Bei allen Ausführungsbeispielen der Fig. 30, 33, 34 und 35 ist der Sensor, durch den die Batteriezustandsanzeige aktiviert wird, von einem Außenraum des Gehäuses durch einen starr mit dem Gehäuse verbunden Bereich wasserdicht getrennt. Dieser Bereich ist beispielsweise ein Bereich des Gehäuses, ein Sichtfenster oder eine Abdeckung. Die Aktivierung der Batteriezustandanzeige erfolgt ohne eine Erkennung der geringfügigen Deformation dieses Bereichs und ist in diesem Sinne berührungslos.

Bei allen Ausführungsbeispielen der Fig. 30, 33, 34 und 35 kann ein ungewolltes Aktivieren der Ladezustandsanzeige im eingebauten Zustand auch durch die oben beschriebene Erkennung des eingebauten Zustands und eine nachfolgende Deaktivierung der Anzeige im eingebauten Zustand vermieden werden.

Der Aspekt einer Fahrzeugbatterie mit Batteriezustandsanzeige kann auch durch die folgende Auflistung beschrieben werden, deren Auflistungspunkte auch mit anderen Merkmalen der Beschreibung kombiniert werden können. Insbesondere kann die in der Auflistung erwähnte Fahrzeugbatterie die Merkmale der zu der vorliegenden Beschreibung gehörigen Patentansprüche aufweisen.

Im der folgenden Auflistung umfasst ein Sensorsignal nicht nur ein an den Anschlüssen eines Sensors anliegendes Signal, sondern auch ein durch analoge Elektronik und/oder digitale Elektronik daraus abgeleitetes Signal. Das weiter unten genannte Erkennen einer ersten und einer zweiten Signalflanke kann sich insbesondere auf das Erkennen eines Spannungsabfalls oder eines Spannungsanstiegs beziehen.
1. Eine wiederaufladbare Elektrobatterie für ein Fahrzeug, die ein Gehäuse aufweist, und die einen Batteriestapel aufweist, der in dem Gehäuse angeordnet ist, wobei der Batteriestapel mit Stromversorgungsanschlüssen der Elektrobatterie verbunden ist, und wobei die Elektrobatterie eine Batteriezustandsanzeige aufweist, die hinter einem Sichtfenster des Batteriegehäuses angeordnet ist, und einen Aktivierungssensor zum Aktivieren der Batteriezustandsanzeige, der im Innern des Gehäuses angeordnet ist, und der von einem Außenraum des Gehäuses durch einen starr mit dem Gehäuse verbunden Bereich wasserdicht getrennt ist,
   wobei die Batteriezustandsanzeige und der Aktivierungssensor mit einer Elektronik der Elektrobatterie verbunden sind, und wobei die Elektronik dazu eingerichtet ist, einen vordefinierten Zeitverlauf eines Sensorsignals zu erkennen, der einer Aktion eines Nutzers entspricht, und die Batteriezustandsanzeige für eine vordefinierte Zeit zu aktivieren, wenn der vordefinierte Zeitverlauf erkannt wurde.
2. Wiederaufladbare Elektrobatterie nach Aufzählungspunkt 1, wobei der starr mit dem Gehäuse verbundene Bereich einer Abdeckung aufweist, die wasserdicht in dem Gehäuse eingefasst ist.
3. Wiederaufladbare Elektrobatterie nach Aufzählungspunkt 1, wobei der starr mit dem Gehäuse verbundene Bereich ein lichtdurchlässiges Sensorfenster aufweist, das wasserdicht in dem Gehäuse eingefasst ist.
4. Wiederaufladbare Elektrobatterie nach einem der vorhergehenden Aufzählungspunkte, wobei der vordefinierte Zeitverlauf des Sensorsignals ein erstes Niveau und ein zweites Niveau aufweist, und wobei das Signal am Anfang und am Ende des Zeitverlaufs dem ersten Niveau entspricht und dazwischen dem zweiten Niveau entspricht, und wobei ein Abstand zwischen dem ersten Niveau und dem ersten Niveau mindestens so groß wie eine vordefinierte Differenz ist.
5. Wiederaufladbare Elektrobatterie nach einem der vorhergehenden Aufzählungspunkte, wobei das Sensorsignal ein Spannungsverlauf ist, und wobei das zweite Niveau unter dem ersten Niveau liegt.
6. Wiederaufladbare Elektrobatterie nach einem der vorhergehenden Aufzählungspunkte, wobei der Aktivierungssensor ein optischer Sensor ist.
7. Wiederaufladbare Elektrobatterie nach einem der Aufzählungspunkte 1 bis 5, wobei der Aktivierungssensor ein kapazitiver Sensor ist.
8. Wiederaufladbare Elektrobatterie nach einem der Aufzählungspunkte 1 bis 5, wobei der Aktivierungssensor eine Erschütterungssensor ist.
9. Wiederaufladbare Elektrobatterie nach einem der Aufzählungspunkte 1 bis 5, wobei der Aktivierungssensor ein Lagesensor ist, und wobei der Lagesensor eine Lage erkennen kann, in der das Sichtfenster horizontal ausgerichtet ist.
10. Verfahren zum Aktivieren einer Batteriezustandsanzeige einer Fahrzeugbatterie durch einen Sensor, der im Innern eines Gehäuses angeordnet ist, und der von einem Außenraum des Gehäuses durch einen starr mit dem Gehäuse verbunden Bereich wasserdicht getrennt ist, wobei das Verfahren die folgenden Schritte aufweist:
   - Empfangen eines Sensorsignals des Sensors über Anschlüsse des Sensors,
   - Erkennen einer vom einem Benutzer ausgelösten Bewegung anhand eines Vergleichs des Sensorsignals mit einem vordefinierten Zeitverlauf des Sensorsignals,
   - Aktivieren einer Batteriezustandsanzeige, die unter einem in das Gehäuse wasserdicht eingefassten Sichtfenster angeordnet ist für eine vordefinierte Zeitdauer,
   - Abschalten der Batteriezustandsanzeige nach der vordefinierten Zeitdauer.
11. Verfahren nach Aufzählungspunkt 10, wobei das Erkennen der vom Benutzer ausgelösten Bewegung das Erkennen einer ersten Signalflanke des Sensorsignals aufweist, und wobei nach dem Erkennen der ersten Signalflanke ein Zeitgeber gestartet wird, wobei der Vergleich des Sensorsignals mit einem vordefinierten Zeitverlauf des Sensorsignals unter Verwendung von Impulsen des Zeitgebers erfolgt.
12. Verfahren nach Aufzählungspunkt 11, wobei das Erkennen der vom Benutzer ausgelösten Bewegung das Erkennen einer zweiten Signalflanke des Sensorsignals aufweist, wobei ein zeitlicher Abstand der zweiten Signalflanke von der ersten Signalflanke bestimmt wird.
13. Verfahren nach einem der Aufzählungspunkte 10 bis 12, wobei der Sensor ein optischer Sensor ist, und wobei das Erkennen der vom Benutzer ausgelösten Bewegung ein Erkennen eines Spannungsabfalls für mindestens eine vordefinierte Mindestzeit aufweist.

Wie in den Aufzählungspunkten kann der Aktivierungssensor für die Batteriezustandsanzeige insbesondere ein optischer Sensor wie beispielsweise eine Fotodiode, ein kapazitiver Sensor, ein Erschütterungssensor oder ein Lagesensor sein. Die von dem Sensor erkannte Aktion des Nutzers kann sich insbesondere auf eine Geste oder Körperbewegung beziehen oder auf ein Bewegen oder in Vibration Versetzen der Fahrzeugbatterie.

Bei dem oben genannten Erkennen eines Spannungsabfalls kann insbesondere eine fallende Signalflanke des Sensorsignals und eine darauffolgende steigende Signalflanke bestimmt werden, wobei eine Bedingung für die Auslösung der Anzeige sein kann, dass eine Zeitdifferenz zwischen der fallenden und der steigenden Flanke größer als eine vordefinierte Mindestzeitdifferenz ist.

Bei dem Signalniveau kann es sich insbesondere um eine Spannungsniveau handeln, wobei das zweite Niveau unterhalb des ersten Niveaus liegen kann, wie beispielsweise beim Spannungsabfall durch Abdecken einer Fotodiode. Der Begriff Sensorsignal kann sich insbesondere auf ein nicht-transientes Signal beziehen, beispielsweise ein Signalverlauf, der in einem Zwischenspeicher gespeichert ist.

Bei Verwendung eines optischen Sensors kann eine Elektronik der Fahrzeugbatterie insbesondere so ausgebildet sein, dass die Batteriezustandsanzeige dann aktiviert wird, wenn der Aktivierungssensor für eine vorgegebene Zeit ganz oder teilweise verdeckt wird. Bei dem kapazitiven Sensor kann die Batteriezustandsanzeige insbesondere dann aktiviert werden, wenn ein Finger eines Benutzers sich für eine vordefinierte Zeit in der Nähe bzw. innerhalb eines vordefinierten Abstands von dem kapazitiven Sensor befindet.

Bei Verwendung eines Erschütterungssensors kann die Batteriezustandsanzeige insbesondere aktiviert werden, wenn das Sensorsignal einem Sensorsignal einer vordefinierten von einem Benutzer ausgelösten Erschütterung entspricht, wie beispielsweise einem Klopfsignal. Bei Verwendung eines Lage- oder Neigungssensors kann die Batteriezustandsanzeige insbesondere dann werden, wenn die Lage des Sichtfensters innerhalb einer vordefinierten Toleranz für mindestens eine vordefinierte Zeit horizontal bleibt.

Obwohl die obige Beschreibung viele Einzelheiten enthält, sollen diese nicht so aufgefasst werden, dass sie den Schutzbereich der Ausführungsbeispiele einschränken, sondern lediglich als eine Veranschaulichung voraussichtlicher Ausführungsformen. Auch die oben genannten Vorteile sollen nicht als Einschränkungen der Ausführungsbeispiele verstanden werden, sondern lediglich eine als Erläuterung möglicher Effekte, wenn die beschriebenen Ausführungsbeispiele in die Praxis umgesetzt werden. Somit soll der Schutzbereich der Ausführungsbeispiele durch die Ansprüche bestimmt sein anstatt durch die angegebenen Beispiele.

**Bezugsziffern**

| | | | |
|---|---|---|---|
| 1 | Fahrzeugbatterie | 41 | zylindrische Aufnahme |
| 5 | Batteriegehäuse | 42 | Endplatte |
| 6 | Befestigungsnut | 43 | rechteckige Öffnung |
| 10 | erster Gehäusedeckel | 44 | kreisförmige Öffnung |
| 15 | zweiter Gehäusedeckel | 45 | Leadframe |
| 16 | Anschlussstecker | 46 | Leadframe-Kontakt |
| 17 | Stromversorgungsanschlüsse | 47 | Landepad |
| | | 48 | Leitungssteg |
| 18 | Mess- und Steuerungsanschlüsse | 49 | Federelement |
| | | 55 | Lüfter |
| 20 | Batteriemanagement-System (BMS) | 60 | Luftkanal |
| | | 61 | Luftströmung |
| 21 | BMS-Kontakte | 65 | Fenster |
| 22 | BMS-Gehäuse | 66 | erste Öffnung |
| 23 | BMS-Elektronik | 67 | Sensorfenster |
| 24 | BMS-Controller | 68 | zweite Öffnung |
| 25 | BMS-Spule | 69 | optischer Sensor |
| 26 | Schalter | 69' | kapazitiver Sensor |
| 27 | Federelement | 69" | Erschütterungssensor |
| 29 | Einzelstapel | 69"' | Lagesensor |
| 30 | Batteriezelle | 71 | Anschlüsse der Anzeigedi oden |
| 31 | Batteriestapel | | |
| 32 | Batteriebündel | 72 | Anschlusskabel |
| 33 | Batteriegruppe | 74 | Beleuchtung |
| 34 | Teilstapel | 75 | Verfahrensschritt |
| 35 | Verbindungshülsenplatte | 76 | Entscheidungsschritt |
| 36 | zylindrische Aufnahme | 77 | Verfahrensschritt |
| 37 | Anschlag | 78 | Entscheidungsschritt |
| 38 | rechteckige Öffnung | 79 | Verfahrensschritt |
| 39 | Wandung | 80 | Verfahrensschritt |
| 40 | Endhülsenplatte | 81 | Finger |

## Patentansprüche

1. Eine wiederaufladbare Elektrobatterie für ein Fahrzeug, die ein Gehäuse aufweist, und die einen Batteriestapel, der in dem Gehäuse angeordnet ist, mit mindestens zwei Teilstapeln aufweist, wobei jeder Teilstapel aus mindestens zwei in Reihe geschalteten Gruppen von Batterien besteht, die in einer Längsrichtung der Elektrobatterie gestapelt sind, wobei die Batterien in jeder Gruppe von Batterien über mindestens ein Leadframe parallel geschaltet sind,
wobei die Batterien weiterhin einen Luftkanal bilden, der sich in der Längsrichtung der Elektrobatterie von einem ersten Ende des Gehäuses zu einem gegenüberliegenden zweiten Ende des Gehäuses erstreckt, wobei innerhalb des Luftkanals ein BMS-Gehäuse eines Batteriemanagementsystems angeordnet ist, das sich in der Längsrichtung des Gehäuses von dem ersten Ende des Gehäuses zu dem gegenüberliegenden zweiten Ende des Gehäuses erstreckt, und das BMS-Kontakte aufweist, die jeweils mit dem Leadframe bzw. mit den Leadframes elektrisch verbunden sind, wobei der Luftkanal zur Ausbildung einer Luftströmung in der Längsrichtung vorgesehen ist, welche die an den Luftkanal angrenzenden Batterien umspült.

2. Elektrobatterie gemäß Anspruch 1, wobei ein Lüfter zur Kühlung vorgesehen ist, der elektrisch mit den Batterien verbunden ist, und der über eine Steuerleitung mit dem Batteriemanagementsystem verbunden ist, wobei der Lüfter so angeordnet ist, dass er einen Luftstrom durch den Luftkanal erzeugt.

3. Elektrobatterie gemäß Anspruch 1 oder Anspruch 2, wobei der Batteriestapel so in dem Gehäuse angeordnet ist, dass eine Luftströmung durch den Luftkanal eine dazu entgegengesetzte Luftströmung an einer Außenseite des Batteriestapels erzeugt.

4. Elektrobatterie gemäß einem der Ansprüche 1 bis 3, wobei das Batteriemanagementsystem so mit den Leadframes verbindbar ist, dass ein Einsetzen eines Gehäuses des Batteriemanagementsystems zu einer elektrisch leitenden Verbindung zwischen dem Batteriemanagementsystem und den Leadframes führt.

5. Elektrobatterie gemäß einem der Ansprüche 1 bis 4, wobei die BMS-Kontakte ohne Lötung oder Schweißung in Anschlussbereiche der Leadframes einführbar sind, wobei eine elektrisch leitende Verbindung zwischen den BMS-Kontakten und den jeweiligen Leadframes entsteht.

6. Elektrobatterie gemäß Anspruch 5, wobei die BMS-Kontakte als Laschen ausgebildet sind, und wobei die Anschlussbereiche der Leadframes federnde Bereiche aufweisen, die die BMS-Kontakte an die Anschlussbereiche andrücken.

7. Elektrobatterie nach einem der vorhergehenden Ansprüche, wobei eine Verbindungshülsenplatte zwischen in axialer Richtung benachbarten Batterien vorgesehen ist, die in axialer Richtung benachbarte Batterien mechanisch miteinander verbindet und die in axialer Richtung auf derselben Höhe befindliche Batterien untereinander mechanisch verbindet.

8. Elektrobatterie nach einem der vorhergehenden Ansprüche, wobei eine Endhülsenplatte zur Aufnahme der an einem Ende der Elektrobatterie befindlichen Batterien vorgesehen ist, die die an dem Ende befindlichen Batterien mechanisch miteinander verbindet.

9. Elektrobatterie nach einem der vorhergehenden Ansprüche, wobei der Luftkanal von einer inneren Lage aus insgesamt sechs Einzelstapeln von in Längsrichtung hintereinander gestapelten Batterien umgeben ist, an die sich in radialer Richtung eine äußere Lage aus weiteren Einzelstapeln von Batterien anschließt.

10. Elektrobatterie nach Anspruch 9, wobei die äußere Lage durch vier Einzelstapel gebildet wird, die sich in einer senkrecht zu den Einzelstapeln angeordneten Querschnittsebene in den vier Ecken eines Rechtecks befinden.

11. Elektrobatterie nach einem der Ansprüche 1 bis 8, wobei der Luftkanal von einer inneren Lage aus insgesamt acht Einzelstapeln von in Längsrichtung hintereinander gestapelten Batterien umgeben ist, an die sich in radialer Richtung eine äußere Lage aus weiteren Einzelstapeln von Batterien anschließt.

12. Elektrobatterie gemäß einem der vorhergehenden Ansprüche, wobei das Batteriemanagementsystem eine BMS-Elektronik aufweist, die mit den BMS-Kontakten verbunden ist, wobei die Elektronik dazu ausgebildet ist, einen Ladzustand der Fahrzeugbatterie zu bestimmen und den vorher bestimmten Ladzustand über eine Ausgangsleitung auszugeben.

13. Elektrobatterie gemäß Anspruch 12, wobei die BMS-Elektronik Eingabeleitungen zum Empfangen von Anfragen und Ausgabeleitungen zum Ausgeben von Statussignalen aufweist, und wobei die Ausgabeleitungen und die Eingabeleitungen im Bereich von Stromversorgungsanschlüssen aus dem Gehäuse der Elektrobatterie herausgeführt sind.

14. Elektrobatterie gemäß Anspruch 12, wobei an einem Ende des Luftkanals ein Lüfter zur Kühlung vorgesehen ist, der elektrisch mit der BMS-Elektronik verbunden ist, und wobei der Lüfter über eine Steuerleitung mit der BMS-Elektronik des Batteriemanagementsystems verbunden ist, wobei der Lüfter so angeordnet ist, dass er einen Luftstrom durch den Hohlraum erzeugt.

15. Elektrobatterie gemäß Anspruch 14, wobei das Batteriemanagementsystem mindestens einen Temperatursensor aufweist, wobei eine Ansteuerung des Lüfters von einer Ausgabe des mindestens einen Temperatursensors abhängt.

16. Elektrobatterie gemäß Anspruch 14 oder Anspruch 15, wobei eine Ansteuerung des Lüfters von einem Ladezustand der Elektrobatterie abhängt, wobei der Ladezustand von dem Batteriemanagementsystem unter Verwendung von an den BMS-Kontakten abgegriffenen Spannungen bestimmt wird.

17. Elektrobatterie nach einem der vorhergehenden Ansprüche, wobei die Elektrobatterie eine Batteriezustandsanzeige aufweist, die hinter einem Sichtfenster des Gehäuses angeordnet ist, und einen Aktivierungssensor zum Aktivieren der Batteriezustandsanzeige, der im Innern des Gehäuses angeordnet ist, und der von einem Außenraum des Gehäuses durch einen starr mit dem Gehäuse verbunden Bereich wasserdicht getrennt ist,
wobei die Batteriezustandsanzeige und der Aktivierungssensor mit einer Elektronik der Elektrobatterie verbunden sind, und wobei die Elektronik dazu eingerichtet ist, einen vordefinierten Zeitverlauf eines Sensorsignals zu erkennen, der einer Aktion eines Nutzers entspricht, und die Batteriezustandsanzeige für eine vordefinierte Zeit zu aktivieren, wenn der vordefinierte Zeitverlauf erkannt wurde.

## Claims

1. A rechargeable electric battery for a vehicle, which comprises a housing, and which comprises a battery stack, which is arranged in the housing, with at least two substacks, each sub-stack consisting of at least two seriesconnected groups of batteries, which are stacked in a longitudinal direction of the electric battery, wherein the batteries in each group of batteries are connected in parallel via at least one leadframe,
wherein the batteries further form an air duct which extends in the longitudinal direction of the electric battery from a first end of the housing to an opposite second end of the housing, wherein a BMS housing of a battery management system is arranged within the air duct which extends in the longitudinal direction of the housing from the first end of the housing to the opposite second end of the housing and which comprises BMS contacts which are each electrically connected to the leadframe or to the leadframes, wherein the air duct is provided for forming an air flow in the longitudinal direction, which flows around the batteries adjacent to the air duct.

2. Electric battery according to claim 1, wherein a fan for cooling is provided, which is electrically connected to the batteries, and which is connected to the battery management system via a control line, wherein the fan is arranged such that it generates an air stream through the air duct.

3. Electric battery according to claim 1 or claim 2, wherein the battery stack is arranged in the housing such that an air flow through the air duct generates an air flow opposite thereto on an outside of the battery stack.

4. Electric battery according to one of claims 1 to 3,
wherein the battery management system is connectable to the leadframes in such a way that an insertion of a housing of the battery management system leads to an electrically conductive connection between the battery management system and the leadframes.

5. Electric battery according to one of claims 1 to 4,
wherein the BMS contacts are insertable into connection regions of the leadframes without soldering or welding, wherein an electrically conductive connection is created between the BMS contacts and the respective leadframes.

6. Electric battery according to claim 5, wherein the BMS contacts are configured as tabs, and wherein the connection regions of the leadframes comprise resilient regions which press the BMS contacts against the connection regions.

7. Electric battery according to one of the preceding claims, wherein a connecting sleeve plate is provided between batteries adjacent in axial direction, which mechanically interconnects batteries adjacent in axial direction and which mechanically interconnects batteries located at the same height in axial direction.

8. Electric battery according to one of the preceding claims, wherein an end sleeve plate is provided for receiving the batteries located at one end of the electric battery, which mechanically interconnects the batteries located at the end.

9. Electric battery according to one of the preceding claims, wherein the air duct is surrounded by an inner layer of a total of six individual stacks of batteries stacked one behind the other in longitudinal direction, which is adjoined in radial direction by an outer layer of further individual stacks of batteries.

10. Electric battery according to claim 9, wherein the outer layer is formed by four individual stacks that are located in a cross-sectional plane arranged perpendicular to the individual stacks in the four corners of a rectangle.

11. Electric battery according to one of claims 1 to 8,
wherein the air duct is surrounded by an inner layer of a total of eight individual stacks of batteries stacked one behind the other in longitudinal direction, which is adjoined in radial direction by an outer layer of further individual stacks of batteries.

12. Electric battery according to one of the preceding claims, wherein the battery management system comprises a BMS electronics which is connected to the BMS contacts, wherein the electronics is configured to determine a state of charge of the vehicle battery and to output the previously determined state of charge via an output line.

13. Electric battery according to claim 12, wherein the BMS electronics comprises input lines for receiving inquiries and output lines for outputting status signals, and wherein the output lines and the input lines are lead through the housing of the electric battery in the region of power supply connections.

14. Electric battery according to claim 12, wherein a fan for cooling is provided at one end of the air duct, which is electrically connected to the BMS electronics, and wherein the fan is connected to the BMS electronics of the battery management system via a control line, wherein the fan is arranged such that it generates an air stream through the cavity.

15. Electric battery according to claim 14, wherein the battery management system comprises at least one temperature sensor, wherein an activation of the fan depends on an output of the at least one temperature sensor.

16. Electric battery according to claim 14 or claim 15,
wherein an activation of the fan depends on a state of charge of the electric battery, wherein the state of charge is determined by the battery management system using voltages tapped at the BMS contacts.

17. Electric battery according to one of the preceding claims, wherein the electric battery comprises a battery status indicator, which is arranged behind a viewing window of the housing, and an activation sensor for activating the battery status indicator, which is arranged inside the housing and which is separated watertightly from an outer space of the housing by a region rigidly connected to the housing,
wherein the battery status indicator and the activation sensor are connected to an electronics of the electric battery, and wherein the electronics is adapted to detect a predefined time behavior of a sensor signal that corresponds to an action by a user, and to activate the battery status indicator for a predefined time, if the predefined time behavior was detected.

## Revendications

1. Batterie électrique rechargeable pour un véhicule, qui comporte un boîtier, et qui comporte un empilement de batteries, qui est agencé dans le boîtier, avec au moins deux sous-empilements, chaque sous-empilement étant constitué d'au moins deux groupes de batteries connectés en série, qui sont empilées dans une direction longitudinale de la batterie électrique, les batteries de chaque groupe de batteries étant connectées en parallèle via au moins une grille de connexion,
dans laquelle les batteries forment en outre un conduit d'air qui s'étend dans la direction longitudinale de la batterie électrique d'une première extrémité du boîtier à une seconde extrémité opposée du boîtier, dans laquelle un boîtier SGB d'un système de gestion de batterie est agencé à l'intérieur du conduit d'air, qui s'étend dans la direction longitudinale du boîtier de la première extrémité du boîtier à la seconde extrémité opposée du boîtier, et qui comporte des contacts SGB qui sont respectivement connectés électriquement à la grille de connexion ou aux grilles de connexion, le conduit d'air étant prévu pour former un écoulement d'air dans la direction longitudinale, qui coule autour les batteries à côté du conduit d'air.

2. Batterie électrique selon la revendication 1, dans laquelle un ventilateur pour le refroidissement est prévu, qui est connecté électriquement aux batteries, et qui est connecté au système de gestion de batterie via une ligne de commande, le ventilateur étant agencé de manière à générer un flux d'air à travers le conduit d'air.

3. Batterie électrique selon la revendication 1 ou la revendication 2, dans laquelle l'empilement de batteries est agencé dans le boîtier de telle sorte qu'un écoulement d'air à travers le conduit d'air génère un écoulement d'air à l'opposé de celui-ci sur un extérieur de l'empilement de batteries.

4. Batterie électrique selon l'une des revendications 1 à 3, le système de gestion de batterie pouvant être connecté aux grilles de connexion de telle sorte qu'une insertion d'un boîtier du système de gestion de batterie conduit à une connexion électriquement conductrice entre le système de gestion de batterie et les grilles de connexion.

5. Batterie électrique selon l'une des revendications 1 à 4, les contacts SGB pouvant être insérés dans des zones de connexion des grilles de connexion sans brasage ni soudure, une connexion électriquement conductrice étant créée entre les contacts SGB et les grilles de connexion respectives.

6. Batterie électrique selon la revendication 5, dans laquelle les contacts SGB sont conçus sous forme de pattes, et dans laquelle les zones de connexion des grilles de connexion comportent des zones élastiques qui pressent les contacts SGB contre les zones de connexion.

7. Batterie électrique selon l'une des revendications précédentes, dans laquelle une plaque de manchon de connexion est prévue entre des batteries adjacentes dans la direction axiale, qui relie mécaniquement des batteries adjacentes dans la direction axiale et qui relie mécaniquement des batteries situées dans la direction axiale à la même hauteur.

8. Batterie électrique selon l'une des revendications précédentes, dans laquelle une plaque de manchon d'extrémité est prévue pour recevoir les batteries situées à une extrémité de la batterie électrique et relie mécaniquement les batteries situées à l'extrémité.

9. Batterie électrique selon l'une des revendications précédentes, dans laquelle le conduit d'air est entouré d'une couche interne d'un total de six empilements individuels de batteries empilées les unes derrière les autres dans la direction longitudinale, suivie dans la direction radiale par une couche externe d'autres empilements individuels de batteries.

10. Batterie électrique selon la revendication 9, dans laquelle la couche externe est formée par quatre empilements individuels qui sont situés dans un plan en coupe transversale disposé perpendiculairement aux empilements individuels dans les quatre coins d'un rectangle.

11. Batterie électrique selon l'une des revendications 1 à 8, dans laquelle le conduit d'air est entouré d'une couche interne d'un total de huit empilements individuels de batteries empilées les unes derrière les autres dans la direction longitudinale, suivie dans la direction radiale par une couche externe d'autres empilements individuels de batteries.

12. Batterie électrique selon l'une des revendications précédentes, dans laquelle le système de gestion de batterie comporte une électronique SGB connectée aux contacts SGB, l'électronique étant conçue pour déterminer un état de charge de la batterie du véhicule et pour délivrer l'état de charge préalablement déterminé via une ligne de sortie.

13. Batterie électrique selon la revendication 12, dans laquelle l'électronique SGB comporte des lignes d'entrée pour recevoir des requêtes et des lignes de sortie pour sortir des signaux d'état, et dans laquelle les lignes de sortie et les lignes d'entrée sortent du boîtier de la batterie électrique dans la zone des connexions d'alimentation.

14. Batterie électrique selon la revendication 12, dans laquelle un ventilateur pour le refroidissement est prévu à une extrémité du conduit d'air, lequel ventilateur est connecté électriquement à l'électronique SGB, et lequel ventilateur est connecté à l'électronique SGB du système de gestion de batterie via une ligne de commande, le ventilateur étant ainsi agencé pour générer un flux d'air à travers la cavité.

15. Batterie électrique selon la revendication 14, dans laquelle le système de gestion de batterie comporte au moins un capteur de température, une activation du ventilateur dépendant d'une sortie du au moins un capteur de température.

16. Batterie électrique selon la revendication 14 ou la revendication 15, dans laquelle une activation du ventilateur dépend d'un état de charge de la batterie électrique, l'état de charge étant déterminé par le système de gestion de batterie en utilisant des tensions prises aux contacts SGB.

17. Batterie électrique selon l'une des revendications précédentes, dans laquelle la batterie électrique comporte un indicateur d'état de la batterie, qui est disposé derrière une fenêtre de visualisation du boîtier, et un capteur d'activation pour activer l'indicateur d'état de la batterie, qui est disposé à l'intérieur du boîtier, et qui est séparé étanche à l'eau d'un espace extérieur du boîtier par une zone reliée rigidement au boîtier,
dans laquelle l'indicateur d'état de la batterie et le capteur d'activation sont connectés à une électronique de la batterie électrique, et dans laquelle l'électronique est configurée pour détecter une courbe de temps prédéfinie d'un signal de capteur qui correspond à une action d'un utilisateur, et pour activer l'indicateur d'état de la batterie pendant un temps prédéfini, si la courbe de temps prédéfinie a été détectée.
